# EUROPÄISCHE PATENTSCHRIFT

(11) **EP 4 302 392 B1**
(45) Veröffentlichungstag und Bekanntmachung des Hinweises auf die Patenterteilung: **18.06.2025**
(21) Anmeldenummer: 22708047.0
(22) Anmeldetag: 07.02.2022
(51) Int. Cl.: H02M 1/00, H02M 1/15, H02M 5/458, H02M 7/5387, H02M 7/5395, H02P 5/74

(54) **VERFAHREN ZUM BETREIBEN EINES ANTRIEBSSYSTEMS UND ANTRIEBSSYSTEM ZUR DURCHFÜHRUNG DES VERFAHRENS**
METHOD FOR OPERATING A DRIVE SYSTEM, AND DRIVE SYSTEM FOR CARRYING OUT THE METHOD
PROCÉDÉ POUR FAIRE FONCTIONNER UN SYSTÈME D'ENTRAÎNEMENT ET SYSTÈME D'ENTRAÎNEMENT POUR METTRE EN OEUVRE LE PROCÉDÉ

(30) Priorität: 04.03.2021 DE 102021001177
(43) Veröffentlichungstag der Anmeldung: 10.01.2024
(73) Patentinhaber: SEW-EURODRIVE GmbH & Co. KG, 76646 Bruchsal (DE)
(72) Erfinder: SCHUSTER, Thomas, 73113 Ottenbach (DE); FUCHS, Manuel, 76709 Kronau (DE)
(86) Internationale Anmeldenummer: PCT/EP2022/052911
(87) Internationale Veröffentlichungsnummer: WO 2022/184383

(56) Entgegenhaltungen:
- EP-A1- 3 125 393
- DE-A1- 102006 039 406
- DE-A1- 102010 031 244

## Beschreibung

Die Erfindung betrifft ein Verfahren zum Betreiben eines Antriebssystems und Antriebssystem zur Durchführung des Verfahrens.

Es ist allgemein bekannt, dass ein Antriebssystem ermöglicht, Elektromotoren drehzahlgeregelt oder drehmomentgeregelt zu betreiben.

**Aus der** DE 10 2018 210 244 A1 **ist ein Verfahren zum Betreiben eines elektrischen Antriebssystems bekannt.**

**Aus der** DE 10 2016 008 951 A1 **ist ein Verfahren zur Regelung eines Spannungszwischenkreises bekannt.**

**Aus der** DE 10 2006 039406 A1 **ist als nächstliegender Stand der Technik ein Verfahren zur Steuerung einer Vielzahl von Servomotor-Antrieben bekannt.**

Der Erfindung liegt daher die Aufgabe zugrunde, ein Antriebssystem weiterzubilden, wobei die Standzeit erhöht werden soll.

Erfindungsgemäß wird die Aufgabe bei dem Antriebssystem nach den in Anspruch 1 und bei dem Verfahren nach den in Anspruch **14** angegebenen Merkmalen gelöst.

Wichtige Merkmale bei dem Verfahren zum Betreiben eines Antriebssystems, aufweisend mehrere, insbesondere mehr als zwei, Wechselrichter sind, dass ein jeweiliger Elektromotor aus dem wechselspannungsseitigen Anschluss des jeweiligen Wechselrichters gespeist wird,
wobei die gleichspannungsseitigen Anschlüsse der jeweiligen Wechselrichter zueinander parallelgeschaltet sind und diese Parallelschaltung mit dem gleichspannungsseitigen Anschluss eines Gleichrichters, insbesondere rückspeisefähigen Gleichrichters, insbesondere mittels Stromschienen, verbunden ist,
wobei jeder Wechselrichter gemäß einer jeweiligen Pulsweitenmodulation angesteuerte Halbleiterschalter aufweist,
wobei die Wechselrichter als Busteilnehmer eines Datenbusses (35) ausgeführt sind, an welchem auch ein als Master ausgeführtes Modul angeschlossen ist,
insbesondere wobei das Modul den Gleichrichter umfasst,
wobei der Master, insbesondere bei Inbetriebnahme des Antriebssystems, den Wechselrichtern die Busadressen vergibt und danach jedem Wechselrichter die Polarität seiner Pulsweitenmodulation, insbesondere seines Pulsweitenmodulationsverfahrens, vorgegeben wird,
wobei die Polarität der Pulsweitenmodulation eines ersten der Wechselrichter sich von der Polarität der Pulsweitenmodulation eines zweiten der Wechselrichter unterscheidet,
insbesondere so, dass die Pulsweitenmodulation der Ansteuersignale für die steuerbaren Halbleiterschalter eines ersten der Wechselrichter gegensynchron getaktet zur Pulsweitenmodulation der Ansteuersignale für die steuerbaren Halbleiterschalter eines zweiten der Wechselrichter ausgeführt wird.

Von Vorteil ist dabei, dass Ausgleichsströme, insbesondere Ableitströme, verringert werden und ein am Gleichrichter netzseitiger Netzfilter somit eine längere Standzeit aufweist.

Bei einer vorteilhaften Ausgestaltung weist jeder Wechselrichter zueinander parallel geschaltete, aus der Gleichspannung gespeiste Halbbrücken auf, die jeweils als Reihenschaltung zumindest zweier steuerbarer Halbleiterschalter ausgeführt sind,
wobei die Halbleiterschalter des jeweiligen Wechselrichters mit pulsweitenmodulierten Ansteuersignalen gemäß der Pulsweitenmodulation des Wechselrichters und ihrer Polarität angesteuert werden. Von Vorteil ist dabei, dass die verschiedenen Wechselrichter verschiedene Polarität aufweisen können. Somit sind die Ausgleichsströme im oder über den Zwischenkreis verminderbar und Bauteile einer geringeren Belastung aussetzbar, insbesondere ein am wechselspannungsseitigen Anschluss des Gleichrichters angeordneter Netzfilter.

Bei einer vorteilhaften Ausgestaltung ist zu Beginn einer jeweiligen Pulsweitenmodulationsperiode
der obere Schalter der ersten Halbbrücke des ersten Wechselrichters geöffnet und der untere Schalter dieser ersten Halbbrücke des ersten Wechselrichters geschlossen,
insbesondere wobei der obere Schalter mit dem oberen Potential der am Gleichspannungsanschluss des Wechselrichters anliegenden Spannung verbunden ist und wobei der untere Schalter mit dem unteren Potential der am Gleichspannungsanschluss des Wechselrichters anliegenden Spannung verbunden ist. Von Vorteil ist dabei, dass der erste Wechselrichter eine positive Polarität aufweist und somit dem nächstbenachbarten Wechselrichter eine umgekehrte, also negative, Polarität zuweisbar ist.

**Bei einer vorteilhaften Ausgestaltung sind vom Master ausgehend die Wechselrichter entlang des Datenbusses als Reihe angeordnet,**
**wobei im ersten Verfahrensschritt vom Master ausgehend, insbesondere sukzessiv, jeder Wechselrichter seinem in der Reihe nachfolgenden Wechselrichter eine Busadresse zuteilt, bis ein Wechselrichter durch das Scheitern einer weiteren Zuteilung einer Busadresse sich als letzter in der Reihe erkennt und daraufhin**
**im zweiten Verfahrensschritt einen Defaultwert als Polarität seiner Pulsweitenmodulation festlegt, wonach ausgehend vom letzten Wechselrichter, insbesondere sukzessiv, jeder Wechselrichter seinem in der Reihe vorgeordneten Wechselrichter eine zu seiner eigenen Polarität invertierte Polarität übermittelt, welche der vorgeordnete Wechselrichter als Polarität seiner Pulsweitenmodulation festlegt,**
**insbesondere wenn er nicht als Doppelwechselrichter, insbesondere Doppelachse, ausgeführt ist, und ansonsten an dem ihm wiederum vorgeordneten Wechselrichter weiterleitet,**
**insbesondere wobei der als Doppelwechselrichter ausgeführte Wechselrichter eine einzige Busadresse aufweist und zwei in einem gemeinsamen Gehäuse angeordnete Einzelwechselrichter, deren Pulsweitenmodulationen eine zueinander invertierte Polarität aufweisen. Von Vorteil ist dabei, dass keine zentrale Zuordnung, sondern eine dezentrale automatische Zuordnung von Adressen und Polarität erreichbar ist.**

**Bei einer vorteilhaften Ausgestaltung weist der Datenbus einen Vorwärtskanal und einen Rückwärtskanal derart auf, dass jeder Wechselrichter einen Eingang und einen Ausgang des Vorwärtskanals aufweist und einen Eingang und einen Ausgang des Rückwärtskanals aufweist, wobei der Master mit dem Eingang des Vorwärtskanals des ersten Wechselrichters verbunden ist und mit dem Ausgang des Rückwärtskanals des ersten Wechselrichters,**
**wobei zur Adressvergabe der Master einem ersten Wechselrichter über den Vorwärtskanal eine erste Busadresse zusendet, welche der erste Wechselrichter als seine eigene Busadresse übernimmt,**
**wobei der erste Wechselrichter aus der ersten Busadresse eine zweite Busadresse erzeugt, insbesondere durch Inkrementierung, und über den Vorwärtskanal dem zweiten Wechselrichter zusendet, wobei der zweite Wechselrichter die zweite Busadresse übernimmt und aus der zweiten Busadresse eine dritte Busadresse erzeugt, insbesondere durch Inkrementierung, und über seinen Vorwärtskanal weiterleitet,**
**wobei jeder weitere Wechselrichter die über seinen Eingang des Vorwärtskanals empfangene Busadresse als seine eigene Busadresse übernimmt und aus der empfangenen Busadresse eine weitere Busadresse erzeugt, insbesondere durch Inkrementierung, und über den Vorwärtskanal dem nachfolgenden Wechselrichter zusendet,**
**wobei ein letzter Wechselrichter durch das Scheitern einer weiteren Zusendung der von ihm erzeugten Busadresse sich als letzter Wechselrichter erkennt. Von Vorteil ist dabei, dass eine hohe Sicherheit beim Ablauf des Verfahrens erreichbar ist, da Vorwärtskanal und Rückwärtskanal getrennt sind und jeder Busteilnehmer zunächst die erhaltenen Daten untersuchen kann, ob diese für ihn bestimmt sind oder ob er sie weiterleiten soll.**

**Erfindungsgemäß,** insbesondere bei Inbetriebnahme, sendet der Master zur Adressvergabe zeitlich wiederkehrend, insbesondere bei Inbetriebnahme und zeitlich wiederkehrend, ein Broadcasttelegramm über den Datenbus sendet, welches einer jeweiligen Adressinformation eine jeweilige Information über eine Polarität zuordnet, insbesondere so dass dem ersten Wechselrichter eine erste und dem zweiten Wechselrichter eine zweite Polarität, insbesondere zur ersten Polarität unterschiedliche Polarität, zugewiesen wird. Von Vorteil ist dabei, dass die Wechselrichter der Reihe nach eine Adresse erhalten, indem immer nur einer der Wechselrichter in Bereitschaft zur Verwendung der jeweiligen mit dem Broadcasttelegramm übertragenen Adresse gesetzt wird.

Bei einer vorteilhaften Ausgestaltung ist vom Master einem ersten Wechselrichter ein Spannungssignal zuleitbar und von einem jeweiligen Wechselrichter ist einem jeweils nächsten Wechselrichter ein Spannungssignal zuleitbar,
wobei der jeweilige das Spannungssignal erhaltende Wechselrichter dann die in einem zeitlich nächsten Broadcasttelegramm des Masters enthaltene Information bezüglich Adresse und/oder Polarität für sich entnimmt. Von Vorteil ist dabei, dass immer nur einer der Wechselrichter bereit ist, die im Broadcasttelegramm enthaltene Adresse zu entnehmen und nach der Entnahme der Wechselrichter dann ein Spannungssignal weitergibt, um den nächsten Wechselrichter bereit zu schalten.

Bei einer vorteilhaften Ausgestaltung sind die Wechselrichter bezüglich der Weiterleitung des Spannungssignals und/oder bezüglich des Datenbusses in einer Reihe angeordnet, insbesondere so dass vom ersten Wechselrichter bis zum vorletzten Wechselrichter der Reihe jedem der Wechselrichter ein anderer Wechselrichter nachgeordnet ist. Von Vorteil ist dabei, dass die Wechselrichter mit einem seriellen Datenbus verbindbar sind.

Bei einer vorteilhaften Ausgestaltung gibt ein letzter Wechselrichter, insbesondere von welchem keinem nachgeordneten Wechselrichter ein Spannungssignal zuleitbar ist, seinem vorgeordneten Wechselrichter die zu seiner eigenen bei der Pulsweitenmodulation verwendeten Polarität invertierte Polarität vor,
wonach dieser vorgeordnete Wechselrichter seinem vorgeordneten Wechselrichter die zu seiner eigenen bei der Pulsweitenmodulation verwendeten Polarität invertierte Polarität vorgibt. Von Vorteil ist dabei, dass die Adressvergabe in der Reihe der Wechselrichter vorwärts und die Vergabe der Polarität in der Reihe rückwärts erfolgt.

Bei einer vorteilhaften Ausgestaltung der Master nach der Adressvergabe an die Wechselrichter diesen die in ihrer jeweiligen Pulsweitenmodulation zu verwendende Polarität übermittelt,
wobei die Polaritäten jeweils derart vergeben werden, dass die Summe der mit ihrer jeweiligen Polarität multiplizierten Nennleistung des jeweiligen Wechselrichters betragsmäßig minimal wird,
insbesondere wobei benachbart angeordnete Wechselrichter bevorzugt eine zueinander unterschiedliche Polarität aufweisen. Von Vorteil ist dabei, dass die unterschiedlichen Polaritäten derart abhängig von der jeweiligen Nennleistung der Wechselrichter vergeben werden, dass eine möglichst geringe Belastung durch Ausgleichsströme, insbesondere Ableitströme, insbesondere im Zwischenkreis, entsteht. Vorzugsweise ist die Summe aus den Produkten aus der Nennleistung und der Polarität möglichst gering.

Bei einer vorteilhaften Ausgestaltung führt zur Adressvergabe ein jeweiliger Wechselrichter einem nachfolgend angeordneten Wechselrichter ein Spannungssignal zu, mit welchem dem jeweils nachfolgenden Wechselrichter signalisiert wird, die im zeitlich danach nächsten Broadcasttelegramm des Masters enthaltene Adresse als eigene Busadresse anzunehmen und selbst ein weiteres Spannungssignal einem weiteren Wechselrichter zuzuführen, wenn dieser vorhanden ist und andernfalls die Polarität seiner Pulsweitenmodulation der in dem Broadcasttelegramm enthaltene Information zur Polarität anzupassen. Von Vorteil ist dabei, dass eine dezentrale Vergabe der Polaritäten ausführbar ist.

Bei einer vorteilhaften Ausgestaltung weist das Antriebssystem einen ersten Wechselrichter und einen zweiten Wechselrichter auf, wobei ein erster Elektromotor aus dem wechselspannungsseitigen Anschluss des ersten Wechselrichters gespeist wird,
wobei ein zweiter Elektromotor aus dem wechselspannungsseitigen Anschluss des zweiten Wechselrichters gespeist wird,
wobei der gleichspannungsseitige Anschluss des ersten Wechselrichters parallel geschaltet ist zum gleichspannungsseitigen Anschluss des zweiten Wechselrichters und diese Parallelschaltung aus einer Gleichspannung, insbesondere Zwischenkreisspannung, versorgt werden, insbesondere mittels Stromschienen,
wobei der erste Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei der zweite Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des ersten Wechselrichters mit pulsweitenmodulierten Ansteuersignalen angesteuert werden,
wobei die Halbleiterschalter des zweiten Wechselrichters mit pulsweitenmodulierten Ansteuersignalen angesteuert werden,
wobei die Pulsweitenmodulation der Ansteuersignale für die steuerbaren Halbleiterschalter des ersten Wechselrichters gegensynchron getaktet zur Pulsweitenmodulation der Ansteuersignale für die steuerbaren Halbleiterschalter des zweiten Wechselrichters ausgeführt wird.

Von Vorteil ist dabei, dass gleichspannungsseitige Ableitströme, insbesondere Ausgleichsströme, verringerbar oder verhinderbar sind. Somit ist auch die Belastung eines Netzfilters verringerbar und somit auch dessen Standzeit erhöhbar, also auch die Standzeit des gesamten Antriebssystems.

Bei einer vorteilhaften Ausgestaltung weist das Antriebssystems einen ersten Wechselrichter und einen zweiten Wechselrichter auf, wobei ein erster Elektromotor aus dem wechselspannungsseitigen Anschluss des ersten Wechselrichters gespeist wird,
wobei ein zweiter Elektromotor aus dem wechselspannungsseitigen Anschluss des zweiten Wechselrichters gespeist wird,
wobei der gleichspannungsseitige Anschluss des ersten Wechselrichters parallel geschaltet ist zum gleichspannungsseitigen Anschluss des zweiten Wechselrichters und diese Parallelschaltung aus einer Gleichspannung, insbesondere Zwischenkreisspannung, versorgt werden, insbesondere mittels Stromschienen,
wobei der erste Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei der zweite Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des ersten Wechselrichters mit pulsweitenmodulierten Ansteuersignalen angesteuert werden,
wobei die Halbleiterschalter des zweiten Wechselrichters mit pulsweitenmodulierten Ansteuersignalen angesteuert werden,
wobei
   - solange der Quotient aus dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters kleiner als ein Schwellwert, insbesondere 1, ist,
      zu Beginn einer jeweiligen Pulsweitenmodulationsperiode
      der obere Schalter der ersten Halbbrücke des ersten Wechselrichters geöffnet ist und der untere Schalter dieser ersten Halbbrücke des ersten Wechselrichters geschlossen ist und
      der obere Schalter der zweiten Halbbrücke des zweiten Wechselrichters geschlossen ist und der untere Schalter dieser zweiten Halbbrücke des zweiten Wechselrichters geöffnet ist,
   - und dass, solange der Quotient aus dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters größer als der Schwellwert, insbesondere 1, ist,
      zu Beginn einer jeweiligen Pulsweitenmodulationsperiode
      der obere Schalter der ersten Halbbrücke des ersten Wechselrichters geöffnet ist und der untere Schalter dieser ersten Halbbrücke des ersten Wechselrichters geschlossen ist und
      der obere Schalter der zweiten Halbbrücke des zweiten Wechselrichters geöffnet ist und der untere Schalter dieser zweiten Halbbrücke des zweiten Wechselrichters geschlossen ist.

Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung weist das Antriebssystem einen ersten Wechselrichter und einen zweiten Wechselrichter auf, wobei ein erster Elektromotor aus dem wechselspannungsseitigen Anschluss des ersten Wechselrichters gespeist wird,
wobei ein zweiter Elektromotor aus dem wechselspannungsseitigen Anschluss des zweiten Wechselrichters gespeist wird,
wobei der gleichspannungsseitige Anschluss des ersten Wechselrichters parallel geschaltet ist zum gleichspannungsseitigen Anschluss des zweiten Wechselrichters und diese Parallelschaltung aus einer Gleichspannung, insbesondere Zwischenkreisspannung, versorgt werden, insbesondere mittels Stromschienen,
wobei der erste Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei der zweite Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des ersten Wechselrichters mit pulsweitenmodulierten Ansteuersignalen angesteuert werden,
wobei die Halbleiterschalter des zweiten Wechselrichters mit pulsweitenmodulierten Ansteuersignalen angesteuert werden,
wobei
   - solange die Differenz zwischen dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters kleiner als ein Schwellwert, insbesondere 50%, ist,
      zu Beginn einer jeweiligen Pulsweitenmodulationsperiode
      der obere Schalter der ersten Halbbrücke des ersten Wechselrichters geöffnet ist und der untere Schalter dieser ersten Halbbrücke des ersten Wechselrichters geschlossen ist und
      der obere Schalter der zweiten Halbbrücke des zweiten Wechselrichters geschlossen ist und der untere Schalter dieser zweiten Halbbrücke des zweiten Wechselrichters geöffnet ist,
   - und dass, solange die Differenz zwischen dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters größer als der Schwellwert, insbesondere 50%, ist,
      zu Beginn einer jeweiligen Pulsweitenmodulationsperiode
      der obere Schalter der ersten Halbbrücke des ersten Wechselrichters geöffnet ist und der untere Schalter dieser ersten Halbbrücke des ersten Wechselrichters geschlossen ist und
      der obere Schalter der zweiten Halbbrücke des zweiten Wechselrichters geöffnet ist und der untere Schalter dieser zweiten Halbbrücke des zweiten Wechselrichters geschlossen ist.

Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung wird die Gleichspannung am gleichspannungsseitigen Anschluss eines netzgespeisten Gleichrichters zur Verfügung gestellt, insbesondere wobei der Gleichrichter, insbesondere an seinem wechselspannungsseitigen Anschluss, aus einem Wechselspannungsnetz insbesondere mit Drehspannung, versorgt wird,

insbesondere wobei der gleichstromseitige Anschluss des Gleichrichters parallel geschaltet ist zum geichspannungsseitigen Anschluss des ersten Wechselrichters und zum gleichspannungsseitigen Anschluss des zweiten Wechselrichters. Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung verlaufen die Pulsweitenmodulationssignale des ersten Wechselrichters zu den Pulsweitenmodulationssignalen des zweiten Wechselrichters synchron, insbesondere synchronisiert. Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung erfolgt der Beginn der Pulsweitenmodulationsperioden des ersten und zweiten Wechselrichters synchron und/oder zeitgleich. Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung ist innerhalb einer jeden Pulsweitenmodulationsperiode die erste Schaltflanke eines Ansteuersignals für einen oberen Halbleiterschalter des ersten Wechselrichters invertiert und/oder erfolgt invers zur ersten Schaltflanke eines Ansteuersignals für einen oberen Halbleiterschalter des zweiten Wechselrichters. Von Vorteil ist dabei, dass Ausgleichsströme verringert werden und somit die Belastung des Netzfilters verringert wird und dadurch dessen Standzeit erhöht wird.

Bei einer vorteilhaften Ausgestaltung ist einer der steuerbaren Halbleiterschalter, also oberer Halbleiterschalter, einer jeweiligen Halbbrücke mit dem oberen Potential der Gleichspannung verbunden.

Bei einer vorteilhaften Ausgestaltung ist einer der steuerbaren Halbleiterschalter, also unterer Halbleiterschalter, einer jeweiligen Halbbrücke mit dem unteren Potential der

Gleichspannung verbunden. Von Vorteil ist dabei, dass die Halbbrücke, also ein Brückenzweig, aus der Gleichspannung versorgbar ist und die Halbbrücke als Reihenschaltung zweiter Halbleiterschalter, insbesondere IGBT oder MODFET, ausführbar ist.

Bei einer vorteilhaften Ausgestaltung ist zu Beginn einer jeweiligen Pulsweitenmodulationsperiode

der obere Schalter einer ersten Halbbrücke des ersten Wechselrichters geöffnet und der untere Schalter dieser ersten Halbbrücke des ersten Wechselrichters geschlossen und

der obere Schalter einer zweiten Halbbrücke des zweiten Wechselrichters ist geschlossen und der untere Schalter dieser zweiten Halbbrücke des zweiten Wechselrichters ist geöffnet. Von Vorteil ist dabei, dass durch die zueinander invertierte Taktung der beiden Pulsweitenmodulationen der beiden Wechselrichter die Ausgleichsströme möglichst verringert werden.

Bei einer vorteilhaften Ausgestaltung,
- solange der Quotient aus dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters kleiner als ein Schwellwert, insbesondere 1, ist,
   ist zu Beginn einer jeweiligen Pulsweitenmodulationsperiode
   der obere Schalter der ersten Halbbrücke des ersten Wechselrichters geöffnet und der untere Schalter dieser ersten Halbbrücke des ersten Wechselrichters ist geschlossen und
   der obere Schalter der zweiten Halbbrücke des zweiten Wechselrichters ist geschlossen und der untere Schalter dieser zweiten Halbbrücke des zweiten Wechselrichters ist geöffnet,
   - und, solange der Quotient aus dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters größer als der Schwellwert, insbesondere 1, ist,
      ist zu Beginn einer jeweiligen Pulsweitenmodulationsperiode
      der obere Schalter der ersten Halbbrücke des ersten Wechselrichters geöffnet und der untere Schalter dieser ersten Halbbrücke des ersten Wechselrichters geschlossen und
      der obere Schalter der zweiten Halbbrücke des zweiten Wechselrichters ist geöffnet und der untere Schalter dieser zweiten Halbbrücke des zweiten Wechselrichters ist geschlossen.

Von Vorteil ist dabei, dass die invertierte Taktung nur dann ausgeführt wird, wenn der Schwellwert unterschritten ist. Somit sind die Ausgleichsströme möglichst verringert.

Bei einer vorteilhaften Ausgestaltung,
- solange die Differenz zwischen dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters kleiner als ein Schwellwert, insbesondere 50%, ist,
   ist zu Beginn einer jeweiligen Pulsweitenmodulationsperiode
   der obere Schalter der ersten Halbbrücke des ersten Wechselrichters geöffnet und der untere Schalter dieser ersten Halbbrücke des ersten Wechselrichters ist geschlossen und
   der obere Schalter der zweiten Halbbrücke des zweiten Wechselrichters ist geschlossen und der untere Schalter dieser zweiten Halbbrücke des zweiten Wechselrichters ist geöffnet,
- und, solange die Differenz zwischen dem Pulsweitenmodulationsverhältnis des Ansteuersignals für eine erste Halbleiterbrücke des ersten Wechselrichters und dem Pulsweitenmodulationsverhältnis des Ansteuersignals für eine zweite Halbleiterbrücke des zweiten Wechselrichters größer als der Schwellwert, insbesondere 50%, ist,
   zu Beginn einer jeweiligen Pulsweitenmodulationsperiode
   ist der obere Schalter der ersten Halbbrücke des ersten Wechselrichters geöffnet und der untere Schalter dieser ersten Halbbrücke des ersten Wechselrichters ist geschlossen und
   der obere Schalter der zweiten Halbbrücke des zweiten Wechselrichters ist geöffnet und der untere Schalter dieser zweiten Halbbrücke des zweiten Wechselrichters ist geschlossen.

Von Vorteil ist dabei, dass die invertierte Taktung nur dann ausgeführt wird, wenn der Schwellwert unterschritten ist. Somit sind die Ausgleichsströme möglichst verringert.

Bei einer vorteilhaften Ausgestaltung wird ein Synchronisationssignal, insbesondere ein Synchronisationsimpulse aufweisendes Synchronisationssignal, auf Stromschienen aufmoduliert, welche die gleichspannungsseitigen Anschlüsse der Wechselrichter miteinander und mit dem gleichspannungsseitigen Anschluss des Gleichrichters verbinden. Von Vorteil ist dabei, dass die Pulsweitenmodulationsfrequenz des ersten Wechselrichters mit der des zweiten Wechselrichters synchronisiert ist und somit die inverse Taktung synchronisiert ausführbar ist. Das Synchronisationssignal ist über eine Datenbusverbindung übertragbar, welche die Signalelektroniken der beiden Wechselrichter verbindet. Alternativ ist aber auch eine Aufmodulation auf die Stromschienen ausführbar, so dass keine weitere Kommunikationsverbindung zwischen den Wechselrichtern vorgesehen werden muss.

Wichtige Merkmale bei dem Antriebssystem zur Durchführung eines der vorgenannten Verfahren sind die gleichspannungsseitigen Anschlüsse der Wechselrichter mittels Stromschienen miteinander und mit dem geichspannungsseitigen Anschluss des Gleichrichters verbunden.

Von Vorteil ist dabei, dass eine einfache kostengünstige Verbindung ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 sind die Phasenspannungen an einem ersten wechselspannungsseitigen Anschluss eines ersten Wechselrichters 1 und an einem ersten wechselspannungsseitigen Anschluss eines ersten Wechselrichters 2 dargestellt.

In der Figur 2 sind die Phasenspannungen gegen Erdpotential dargestellt.

In der Figur 3 ist ein erfindungsgemäßes Antriebssystem mit mehr als zwei Wechselrichtern dargestellt.

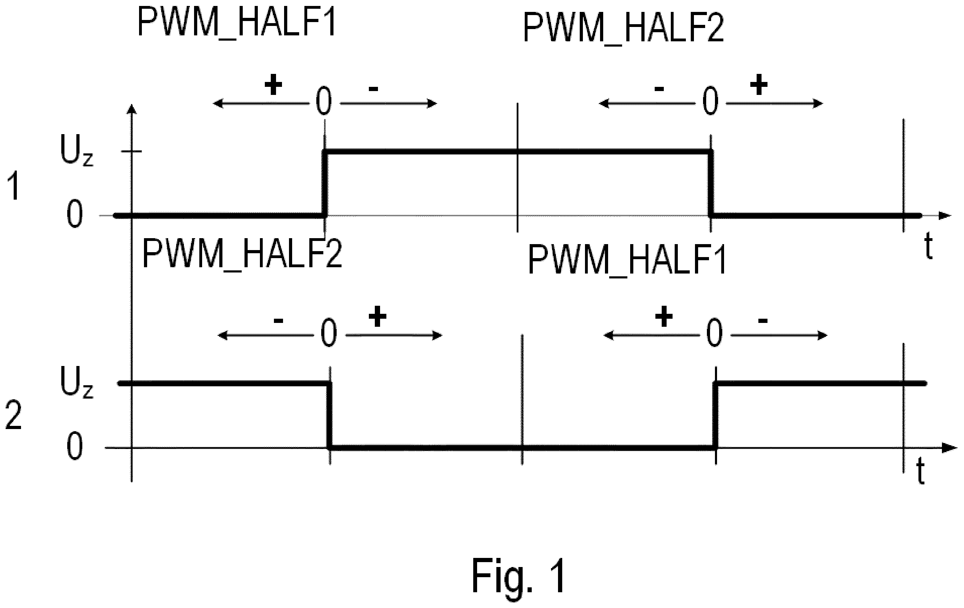

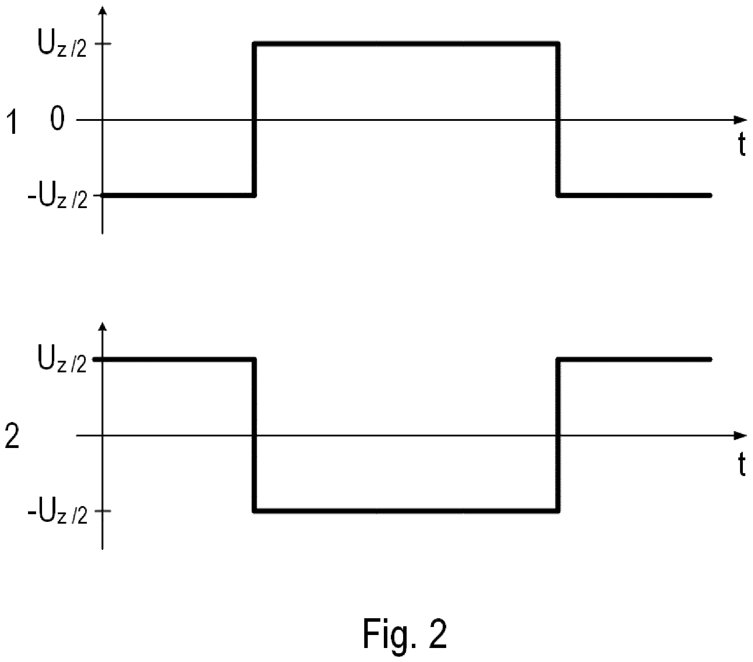

Wie in den Figuren 1 und 2 gezeigt, weist ein erstes erfindungsgemäßes Antriebssystem einen ersten Wechselrichter 1 und einen zweiten Wechselrichter 2 auf, die mit ihrem gleichspannungsseitigen Anschluss parallel von einer Gleichspannung versorgt werden.

Vorzugsweise wird diese Gleichspannung von einem netzgespeisten Gleichrichter zur Verfügung gestellt.

Vorzugsweise weist jeder der beiden Wechselrichter (1, 2) an seinem gleichspannungsseitigen Anschluss einen Glättungskondensator, insbesondere einen mehrstückig ausgeführten Glättungskondensator, auf.

Jeder der beiden Wechselrichter (1, 2) weist jeweils drei parallel geschaltete Reihenschaltungen auf, wobei jede Reihenschaltung zwei steuerbare Halbleiterschalter aufweist. Am Verbindungsknoten der beiden steuerbaren Halbleiterschalter einer jeweiligen Reihenschaltung wird somit eine jeweilige Phasenspannung dem Elektromotor zur Verfügung gestellt.

Vorzugsweise ist der wechselspannungsseitige Anschluss des Wechselrichters dreiphasig ausgeführt, so dass also jeder Wechselrichter (1, 2) jeweils drei dieser Reihenschaltungen aufweist und somit drei Phasenspannungen dem Motor zur Verfügung gestellt werden. Jeder Wechselrichter (1, 2) weist jeweils eine als Signalelektronik ausgeführte elektronische Schaltung auf, welche pulsweitenmodulierte Ansteuersignale für die steuerbaren Halbleiterschalter des Wechselrichters (1, 2) erzeugt.

Wie in Figur 1 gezeigt, wird zur Erzeugung eines jeweiligen Wertes an Phasenspannung, das Pulsweitenmodulationsverhältnis innerhalb einer Pulsweitenmodulationsperiode vorgegeben. In der Figur 1 ist ein Pulsweitenmodulationsverhältnis von 50% dargestellt. Hierbei wird zu Beginn der Pulsweitenmodulationsperiode der untere Halbleiterschalter der Reihenschaltung geschlossen und der obere Halbleiterschalter der Reihenschaltung geöffnet.

Dabei wird also der Anschluss für die Phasenspannung mit dem unteren Potential der Gleichspannung, also Zwischenkreisspannung U_z, verbunden. Nach Ablauf eines Viertel der Periodendauer der Pulsweitenmodulationsperiode wird der untere Halbleiterschalter geöffnet und der obere geschlossen, so dass nun der Anschluss für die Phasenspannung mit dem oberen Potential der Gleichspannung verbunden ist, wobei dies die halbe Periodendauer andauert.

Erfindungsgemäß wird der zweite Wechselrichter 2 mit relativ zum ersten Wechselrichter invertierten Schaltflanken betrieben. In Figur 1 wird beispielhaft wiederum ein Pulsweitenmodulationsverhältnis von 50% gewählt. Hierbei wird jedoch in der Reihenschaltung des zweiten Wechselrichters 2 zu Beginn der Pulsweitenmodulationsperiode der obere Halbleiterschalter der Reihenschaltung geschlossen und der untere Halbleiterschalter der Reihenschaltung geöffnet. Dabei wird also der Anschluss für die zu dieser Reihenschaltung zugehörige Phasenspannung des zweiten Wechselrichters 2 mit dem oberen Potential der Gleichspannung, also Zwischenkreisspannung U_z, verbunden. Nach Ablauf eines Viertel der Periodendauer der Pulsweitenmodulationsperiode wird der obere Halbleiterschalter geöffnet und der untere geschlossen, so dass nun der Anschluss für die Phasenspannung mit dem unteren Potential der Gleichspannung verbunden ist, wobei dies die halbe Periodendauer andauert.

Wenn statt der 50% in den Reihenschaltungen andere Pulsweitenmodulationsverhältnisse angesteuert werden, wird die jeweilige Schaltflanke ins Plus + oder Minus - verschoben, wie aus der Figur 1 ersichtlich. Somit schalten die Halbleiterschalter der Halbbrücke des ersten Wechselrichters 1 nicht exakt gleichzeitig mit der Halbbrücke des zweiten Wechselrichters 2 Auf diese Weise werden Ausgleichsströme im Zwischenkreis, also zwischen den gleichspannungsseitigen Anschlüssen der Wechselrichter (1, 2) zumindest verringert oder sogar ganz vermieden.

Besonders wichtig ist dieser erfindungsgemäße Vorteil, wenn vom wechselspannungsseitigen Anschluss des jeweiligen Wechselrichters (1, 2) zum jeweiligen Elektromotor sehr lange Kabel verwendet werden. Denn dann liegen hohe Erdkapazitäten der Kabel und Motoren vor, so dass ein gemeinsames Netzfilter, das an dem die Gleichspannung zur Verfügung stellenden netzgespeisten Gleichrichter angeordnet ist, hohen Ableitströmen ausgesetzt ist.

Wenn die erste Schaltflanke innerhalb der Pulsweitenmodulationsperiode zum oberen Potential hinspringt, weist die Pulsweitenmodulation eine positive Polarität auf. Wenn die erste Schaltflanke innerhalb der Pulsweitenmodulationsperiode zum unteren Potential hinspringt, weist die Pulsweitenmodulation eine negative Polarität auf.

Um die Pulsweitenmodulation der beiden Wechselrichter (1, 2) miteinander zu synchronisieren wird zeitlich wiederkehrend ein Synchronisationssignal übertragen. Vorzugsweise ist hierzu die Signalelektronik des ersten Wechselrichters 1 mit der Signalelektronik des zweiten Wechselrichters 2 über eine Datenbusverbindung verbunden. Im einfachsten Fall ist diese Datenbusverbindung kabelgebunden ausgeführt, insbesondere in einem geschirmten Kabel.

Alternativ wird das Synchronisationssignal auf die gleichspannungsseitige Verbindung der Wechselrichter (1, 2) aufmoduliert. Da das obere Potential des gleichspannungsseitigen Anschlusses des ersten Wechselrichters 1 mit dem obere Potential des gleichspannungsseitigen Anschlusses des zweiten Wechselrichters 1 vorzugsweise mittels einer Stromschiene verbunden ist, um das Durchleiten eines starken Stroms zu ermöglichen, wird also das Synchronisationssignal auf den in der Stromschiene vorhandenen Strom aufmoduliert. Die Einkoppelung des mittelfrequenten oder hochfrequenten Synchronisationssignals zur Stromschiene hin erfolgt im ersten Wechselrichter 1 über eine Kapazität; die Auskoppelung des Signals im zweiten Wechselrichter 2 erfolgt ebenfalls über eine Kapazität. Alternativ wäre zwar eine induktive und somit sichere und potentialfreie Ein- und Auskoppelung ermöglicht, was aber zu einem höheren Aufwand führt.

Bei weiteren erfindungsgemäßen Ausführungsbeispielen wird die beschriebene Invertierung des Pulsweitenmodulationssignals beim zweiten Wechselrichter 2 nur so lange betrieben, solange der Betrag der Differenz der beiden Pulsweitenmodulationsverhältnisse kleiner als 50% beträgt. Bei Überschreitung dieser 50% wird die Invertierung aufgehoben und ein synchrones gleichgetaktetes Pulsweitenmodulationssignal verwendet.

Alternativ ist als Kriterium auch der Quotient der beiden Pulsweitenmodulationsverhältnisse verwendbar. Wenn dieser Quotient den Betrag 1 überschreitet, wird die oben beschriebene Invertierung angewendet und ansonsten nicht.

Auf diese Weise ist auch bei sehr unterschiedlichen Arbeitspunkten der beiden Wechselrichter (1, 2) eine Verringerung der Ausgleichsströme erreichbar. Dies ist beispielsweise dann der Fall, wenn der erste Wechselrichter 1 eine hohe Phasenspannung, insbesondere also ein nahe am oberen Potential der Gleichspannung liegendes Potential, und der zweite Wechselrichter 2 eine niedrige Phasenspannung, insbesondere also ein nahe am unteren Potential der Gleichspannung liegendes Potential, erzeugt. Ein Beispiel für eine hohe Phasenspannung ist 0,9 U_z und ein Beispiel für eine niedrige Phasenspannung ist 0,1 * U_z.

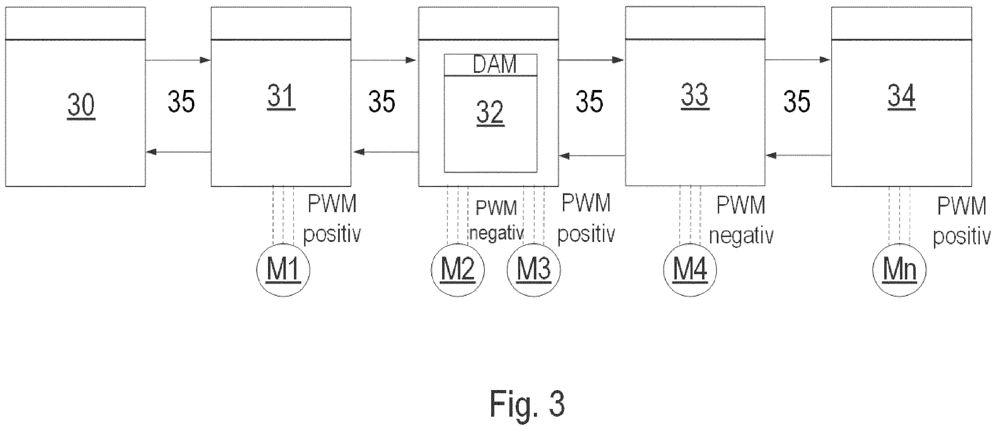

Wie in Figur 3 dargestellt, weist ein zweites Antriebssystem einen Datenbus 35 auf, über welches ein als Master 3 ausgeführtes Versorgungsmodul mit Wechselrichtern (31, 32, 33, 34) zum Datenaustausch verbunden sind.

Das Versorgungsmodul weist einen netzgespeisten Gleichrichter auf, aus dessen gleichspannungsseitigen Anschluss die genannten Wechselrichter (31, 32, 33, 34) gespeist sind. Hierzu sind die gelichspannungsseitigen Anschlüsse der Wechselrichter (31, 32, 33, 34) parallel am gleichspannungsseitigen Anschluss des Gleichrichters angeschlossen.

Vorzugsweise ist der Gleichrichter rückspeisefähig ausgeführt, insbesondere also als AC/DC-Wandler, der bei überwiegend motorischer Leistung des Antriebssystems elektrische Leistung des Wechselspannungsversorgungsnetzes gleichrichtet und den Wechselrichtern am gleichspannungsseitigen Anschluss als Zwischenkreisspannung zur Verfügung stellt und bei überwiegend generatorischer Leistung des Antriebssystems elektrische Leistung vom gleichspannungsseitigen Anschluss des Gleichrichters ins Wechselspannungsnetz rückspeist.

**Außerdem vergibt das als Master 30 ausgeführte Versorgungsmodul bei Inbetriebnahme des Antriebssystems zunächst die Busadressen an die als Busteilnehmer ausgeführten, bezüglich des Datenbus seriell angeordneten Wechselrichter (31, 32, 33, 34).**

**Hierzu vergibt der Master 30 an den in der seriellen Anordnung vom Master aus gesehen ersten Wechselrichter 31 eine erste Busadresse. Dies erfolgt dadurch, dass der Master 30 ein Spannungssignal erzeugt, das dem ersten, also mit einer elektrischen Leitung direkt verbundenen Wechselrichter 31 signalisiert, dass dieser die im nächsten, vom Master gesendeten Broadcasttelegramm enthaltene Busadresse als eigene Busadresse übernimmt. Danach erzeugt der erste Wechselrichter 31 für den zweiten Wechselrichter 32 ebenso ein Spannungssignal, so dass die im nächsten Broadcasttelegramm enthaltene Busadresse vom zweiten Wechselrichter 32 übernommen wird. Dieses Verfahren zur Adressvergabe wird bis zum letzten als Busteilnehmer ausgeführte Wechselrichter 34 fortgesetzt.**

**Nach oder bei Abschluss der Adressvergabe sendet der Master eine vorgegebene Polarität der Pulsweitenmodulation an den letzten Busteilnehmer oder der letzte verwendet einen Default-Wert für seine Polarität. Somit ist die Pulsweitenmodulation für den letzten Wechselrichter festgelegt, insbesondere somit also die Richtung der ersten, also zeitlich ersten, Schaltflanke innerhalb jeder Pulsweitenmodulationsperiode. Beispielsweise ist die Richtung diese erste Schaltflanke als ansteigende Flanke und nicht als abfallende Flanke vorgegeben.**

**Danach erzeugt der letzte Wechselrichter 34 ein Spannungssignal auf der oder auf einer anderen elektrischen Leitung, wodurch dem vorhergehenden Wechselrichter 33 eine invertierte Flankenrichtung der ersten Schaltflanke seiner Pulsweitenmodulation vorgegeben wird. Hierbei ist auch einfach ausführbar, dass der letzte Wechselrichter 34 eine zu seiner eigenen Polarität invertierte Polarität an den vorhergehenden Wechselrichter 33 übermittelt. Dieses Verfahren wird so bis zum ersten Wechselrichter 31 fortgesetzt, so dass jeweils nächstbenachbarte Busteilnehmer zueinander invertierte Flankenrichtungen ihrer jeweils ersten Schaltflanke in der jeweiligen Pulsweitenmodulationsperiode aufweisen.**

**Vorteiligerweise muss also der Master nicht vorausberechnen, welcher Wechselrichter welche Polarität bekommt und somit keine zentrale Vorgabe machen, sondern die Polarität wird dezentral vergeben.**

In einem anderen erfindungsgemäßen Ausführungsbeispiel wird nach der Adressvergabe an die Busteilnehmer vom jeweiligen Wechselrichter die Nennleistung ermittelt und davon abhängig dann die Polarität vergeben, so dass ungefähr die halbe Nennleistung des Antriebssystems eine erste Polarität und die restlichen Wechselrichter die invertierte Polarität aufweisen. Dabei wird zusätzlich die Polarität vorzugsweise derart vergeben, dass entlang der seriellen Verbindung nächstbenachbarte Wechselrichter möglichst unterschiedliche Polarität aufweisen.

Die Vergabe der Polarität wird also gemäß dieser beiden Optimierungskriterien ausgeführt.

Der zweite Wechselrichter 32 weist zwei wechselspannungsseitige Anschlüsse auf, so dass ein zweiter Elektromotor M2 und ein dritter Elektromotor M3 jeweils mit einer pulsweitenmodulierten Spannung versorgbar sind. Hierbei wird die gleiche Polarität bei den beiden Pulsweitenmodulationen verwendet, da die beiden Pulsweitenmodulationen im gleichen Gerät, also innerhalb desselben Gehäuses ausgeführt werden.

Wichtig ist bei dem Antriebssystem auch, dass zwischen dem vorzugsweise als Drehspannungsnetz ausgeführten Wechselspannungsversorgungsnetz und dem wechselspannungsseitigen Anschluss des Gleichrichters des Versorgungsmoduls ein Netzfilter angeordnet ist.

Dieses Netzfilter weist drei Kapazitäten auf, die an ihrem ersten Anschluss miteinander elektrisch verbunden sind und an ihrem anderen Anschluss mit einer jeweiligen Phase des wechselspannungsseitigen Anschlusses des Gleichrichters des Versorgungsmoduls verbunden sind. Somit ist ein Sternpunkt am jeweiligen ersten Anschluss gebildet. Dieser Sternpunkt ist mit einem Schutzleiter und/oder mit elektrisch Erde galvanisch verbunden.

An dem gleichspannungsseitigen Anschluss des Gleichrichters ist ein aus zwei in Reihe geschalteten Kapazitäten gebildeter Spannungsteiler gebildet, dessen Verbindungsknoten, insbesondere also das durch die Herabteilung der Zwischenkreisspannung entstandene Potential, mit dem Sternpunkt, insbesondere also auch mit dem Schutzleiter und/oder mit elektrisch Erde, galvanisch verbunden.

Des Weiteren sind auch drei weitere Kapazitäten vorgesehen, die an ihrem ersten Anschluss miteinander elektrisch verbunden sind und an ihrem anderen Anschluss mit einer jeweiligen Motorphase verbunden sind. Somit ist auch an deren erstem Anschluss ein Sternpunkt gebildet, der mit dem vorgenannten Sternpunkt elektrisch verbunden ist.

Der Wechselrichter weist wiederum drei zueinander parallel aus der am gleichspannungsseitigen Anschluss des Wechselrichters anliegenden Gleichspannung versorgte Halbbrücken auf, deren Verbindungsknoten, insbesondere also Brückenabzweigung, mit den Motorphasenverbunden sind. Jede der Halbbrücken weist eine Reihenschaltung aus einem oberen und einem unteren steuerbaren Halbleiterschalter auf.

In einem anderen erfindungsgemäßen Ausführungsbeispiel ist jeder Wechselrichter, wie in Figur 3 dargestellt, mit einem Vorwärtskanal und einem Rückwärtskanal mit seinem benachbarten Wechselrichter oder Master verbunden.

Zu Beginn der Inbetriebnahme oder Initialisierung meldet sich zunächst jeder Wechselrichter, indem er ein Telegramm an den Master 30 auf dem Rückwärtskanal abschickt, das von dem vorgeordneten Wechselrichter wiederum über dessen Rückwärtskanal weitergeleitet wird, bis dies so fortgesetzt den Master 30 erreicht.

Zur Adressvergabe schickt der Master 30 an den ersten Wechselrichter 31 auf dem Vorwärtskanal eine Busadresse, welche dieser erste Wechselrichter 31 für sich selbst annimmt. Danach addiert der erste Wechselrichter 31 zur Busadresse einen Wert oder inkrementiert diese, wobei er diese so entstandene Busadresse dem zweiten Wechselrichter 32 auf dem Vorwärtskanal übermittelt. Auf diese Weise verfährt dann der zweite Wechselrichter 32 genauso und danach der dritte Wechselrichter 33 ebenso. Wenn der vierte Wechselrichter 33 die von ihm inkrementierte Busadresse an seinem Vorwärtskanal abschickt und danach innerhalb einer Zeitspanne keine Antwort auf seinem Eingang für den Rückwärtskanal erhält, legt er fest, dass er der letzte Wechselrichter in dem Antriebssystem ist. Somit liest er den Defaultwert des die Polarität seiner Pulsweitenmodulation beschreibenden Parameters aus seinem Datenspeicher aus und aktiviert diesen in seiner die Pulsweitenmodulation ausführenden Signalelektronik seines Wechselrichters.

Danach schickt der letzte Wechselrichter 34 über den Rückwärtskanal an den ihm vorgeordneten Wechselrichter 33 eine Information über die Polarität des letzte Wechselrichters 34. Der Wechselrichter 33 empfängt diese Information und aktiviert in seiner Pulsweitenmodulation die zur Polarität des letzten Wechselrichters 34 invertierte Polarität. Dieses Verfahren wird so fortgesetzt bis zum ersten Wechselrichter 31.

Wenn jedoch ein Wechselrichter, der ebenfalls als Busteilnehmer ausgeführt ist und somit nur eine einzige Busadresse aufweist, mehrteilig ausgeführt ist, also aus zwei einzelnen Wechselrichtern zusammengesetzt ist, die in einem gemeinsamen Gehäuse angeordnet sind, wird die vom nachgeordneten Wechselrichter über den Rückwärtskanal erhaltene Information unverändert an den diesem aus zwei einzelnen Wechselrichtern zusammengesetzten Wechselrichter vorgeordneten Wechselrichter weitergeleitet, da die beiden einzelnen Wechselrichter sowieso zueinander invertierte Polarität erhalten. Vorzugsweise ist diese zueinander invertierte Polarität mittels Hardware dauerhaft festgelegt.

Ein solcher aus zwei einzelnen Wechselrichtern, also Einzelwechselrichtern, zusammengesetzter Wechselrichter ist auch als Doppelwechselrichter oder Doppelachse bezeichenbar.

### Bezugszeichenliste

- 1: erster Wechselrichter
- 2: zweiter Wechselrichter

- 30: Master
- 31: erster Wechselrichter als erster Slave
- 32: zweiter Wechselrichter als dritter Slave
- 33: dritter Wechselrichter als dritter Slave
- 34: letzter Wechselrichter als letzter Slave
- 35: Datenbus

- M1: erster Elektromotor
- M2: zweiter Elektromotor
- M3: dritter Elektromotor
- M4: vierter Elektromotor
- Mn: letzter Elektromotor

## Patentansprüche

1. Verfahren zum Betreiben eines Antriebssystems, aufweisend mehrere, insbesondere mehr als zwei, Wechselrichter (31, 32, 33, 34), und einen Datenbus (35),
wobei ein jeweiliger Elektromotor (M1 M2, M3, M4, Mn) aus dem wechselspannungsseitigen Anschluss des jeweiligen Wechselrichters (31, 32, 33, 34) gespeist wird,
wobei die gleichspannungsseitigen Anschlüsse der jeweiligen Wechselrichter (31, 32, 33, 34) zueinander parallelgeschaltet sind und diese Parallelschaltung mit dem gleichspannungsseitigen Anschluss eines Gleichrichters, insbesondere steuerbaren und/oder rückspeisefähigen Gleichrichters, insbesondere mittels Stromschienen, verbunden ist,
wobei der jeweilige Wechselrichter (31, 32, 33, 34) jeweilige, gemäß einer jeweiligen Pulsweitenmodulation angesteuerte Halbleiterschalter aufweist,
wobei die Wechselrichter (31, 32, 33, 34) als Busteilnehmer eines Datenbusses (35) ausgeführt sind, an welchem auch ein als Master (30) ausgeführtes Modul angeschlossen ist,
insbesondere wobei das Modul den Gleichrichter umfasst,
**wobei** in einem ersten Verfahrensschritt, **insbesondere bei Initialisierung oder Inbetriebnahme des Antriebssystems, jedem Wechselrichter (31, 32, 33, 34) eine jeweilige Busadresse zugeteilt wird** und danach in einem zweiten Verfahrensschritt jedem Wechselrichter (31, 32, 33, 34) die Polarität seiner Pulsweitenmodulation, insbesondere seines Pulsweitenmodulationsverfahrens, vorgegeben wird,
wobei die Polarität der Pulsweitenmodulation eines ersten der Wechselrichter (31, 32, 33, 34) sich von der Polarität der Pulsweitenmodulation eines zweiten der Wechselrichter (31, 32, 33, 34) unterscheidet,
insbesondere so, dass die Pulsweitenmodulation der Ansteuersignale für die steuerbaren Halbleiterschalter des ersten der Wechselrichter (31, 32, 33, 34) gegensynchron getaktet zur Pulsweitenmodulation der Ansteuersignale für die steuerbaren Halbleiterschalter des zweiten der Wechselrichter (31, 32, 33, 34) ausgeführt wird,
**dadurch gekennzeichnet, dass**
**zur Adressvergabe ein jeweiliger Wechselrichter (31, 32, 33, 34) einem nachfolgend angeordneten Wechselrichter (31, 32, 33, 34) ein Spannungssignal zuführt, mit welchem dem jeweils nachfolgenden Wechselrichter (31, 32, 33, 34) signalisiert wird, die im zeitlich danach nächsten Broadcasttelegramm des Masters (30) enthaltene Adresse als eigene Busadresse anzunehmen und selbst ein weiteres Spannungssignal einem weiteren Wechselrichter (31, 32, 33, 34) zuzuführen, wenn dieser vorhanden ist und andernfalls die Polarität seiner Pulsweitenmodulation der in dem Broadcasttelegramm enthaltene Information zur Polarität anzupassen.**

2. Verfahren nach Anspruch 1,
**dadurch gekennzeichnet, dass**
jeder Wechselrichter (31, 32, 33, 34) zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des jeweiligen Wechselrichters (31, 32, 33, 34) mit pulsweitenmodulierten Ansteuersignalen gemäß der Pulsweitenmodulation des Wechselrichters (31, 32, 33, 34) und ihrer Polarität angesteuert werden.

3. Verfahren nach Anspruch 1 oder 2,
**dadurch gekennzeichnet, dass**
zu Beginn einer jeweiligen Pulsweitenmodulationsperiode
der obere Schalter der ersten Halbbrücke des ersten Wechselrichters (31) geöffnet ist und der untere Schalter dieser ersten Halbbrücke des ersten Wechselrichters (31) geschlossen ist,
insbesondere wobei der obere Schalter mit dem oberen Potential der am gleichspannungsseitigen Anschluss des Wechselrichters (31, 32, 33, 34) anliegenden Spannung verbunden ist und wobei der untere Schalter mit dem unteren Potential der am gleichspannungsseitigen Anschluss des Wechselrichters (31, 32, 33, 34) anliegenden Spannung verbunden ist.

4. **Verfahren nach einem der vorangegangenen Ansprüche,**
**dadurch gekennzeichnet, dass**
**vom Master (30) ausgehend, die Wechselrichter (31, 32, 33, 34) entlang des Datenbusses (35) als Reihe angeordnet sind,**
**wobei im ersten Verfahrensschritt vom Master (30) ausgehend, insbesondere sukzessiv, jeder Wechselrichter (31, 32, 33, 34) seinem in der Reihe nachfolgenden Wechselrichter (31, 32, 33, 34) eine Busadresse zuteilt, bis ein Wechselrichter (31, 32, 33, 34) durch das Scheitern einer weiteren Zuteilung einer Busadresse sich als letzter in der Reihe erkennt und daraufhin**
**im zweiten Verfahrensschritt einen Defaultwert als Polarität seiner Pulsweitenmodulation festlegt, wonach ausgehend vom letzten Wechselrichter (31, 32, 33, 34), insbesondere sukzessiv, jeder Wechselrichter (31, 32, 33, 34) seinem in der Reihe vorgeordneten Wechselrichter (31, 32, 33, 34) eine zu seiner eigenen Polarität invertierte Polarität übermittelt,**
**welche der vorgeordnete Wechselrichter (31, 32, 33, 34) als Polarität seiner Pulsweitenmodulation festlegt,**
**insbesondere wenn er nicht als Doppelwechselrichter, insbesondere Doppelachse, ausgeführt ist, und ansonsten an dem ihm wiederum vorgeordneten Wechselrichter (31, 32, 33, 34) weiterleitet,**
**insbesondere wobei der als Doppelwechselrichter ausgeführte Wechselrichter (31, 32, 33, 34) eine einzige Busadresse aufweist und zwei in einem gemeinsamen Gehäuse angeordnete Einzelwechselrichter, deren Pulsweitenmodulationen eine zueinander invertierte Polarität aufweisen.**

5. **Verfahren nach einem der vorangegangenen Ansprüche,**
**dadurch gekennzeichnet, dass**
**der Datenbus (35) einen Vorwärtskanal und einen Rückwärtskanal derart aufweist, dass jeder Wechselrichter (31, 32, 33, 34) einen Eingang und einen Ausgang des Vorwärtskanals aufweist und einen Eingang und einen Ausgang des Rückwärtskanals aufweist, wobei der Master (30) mit dem Eingang des Vorwärtskanals des ersten Wechselrichters** (31) **verbunden ist und mit dem Ausgang des Rückwärtskanals des ersten Wechselrichters** (31),
**wobei zur Adressvergabe der Master (30) einem ersten Wechselrichter (31, 32, 33, 34) über den Vorwärtskanal eine erste Busadresse zusendet, welche der erste Wechselrichter (31) als seine eigene Busadresse übernimmt,**
**wobei der erste Wechselrichter (31) aus der ersten Busadresse eine zweite Busadresse erzeugt, insbesondere durch Inkrementierung, und über den Vorwärtskanal dem zweiten Wechselrichter (32) zusendet, wobei der zweite Wechselrichter (32) die zweite Busadresse übernimmt und aus der zweiten Busadresse eine dritte Busadresse erzeugt, insbesondere durch Inkrementierung, und über seinen Vorwärtskanal weiterleitet,**
**wobei jeder weitere Wechselrichter (31, 32, 33, 34) die über seinen Eingang des Vorwärtskanals empfangene Busadresse als seine eigene Busadresse übernimmt und aus der empfangenen Busadresse eine weitere Busadresse erzeugt, insbesondere durch Inkrementierung, und über den Vorwärtskanal dem nachfolgenden Wechselrichter (31, 32, 33, 34) zusendet,**
**wobei ein letzter Wechselrichter (31, 32, 33, 34) durch das Scheitern einer weiteren Zusendung der von ihm erzeugten Busadresse sich als letzter Wechselrichter (31, 32, 33, 34) erkennt.**

6. Verfahren nach einem der Ansprüche 1 bis 3,
**dadurch gekennzeichnet, dass**
zur Adressvergabe der Master (30) zeitlich wiederkehrend, insbesondere bei Inbetriebnahme und zeitlich wiederkehrend, ein Broadcasttelegramm über den Datenbus (35) sendet, welches einer jeweiligen Adressinformation eine jeweilige Information über eine Polarität zuordnet, insbesondere so, dass dem ersten Wechselrichter (31) eine erste und dem zweiten Wechselrichter (32) eine zweite, insbesondere zur ersten unterschiedliche, Polarität zugewiesen wird.

7. Verfahren nach Anspruch 6,
**dadurch gekennzeichnet, dass**
vom Master (30) einem ersten Wechselrichter (31) ein Spannungssignal zuleitbar ist und von einem jeweiligen Wechselrichter (31, 32, 33, 34) einem jeweils nächsten Wechselrichter (31, 32, 33, 34) ein Spannungssignal zuleitbar ist,
wobei der jeweilige das Spannungssignal erhaltende Wechselrichter (31, 32, 33, 34) dann die in dem zeitlich nachfolgenden Broadcasttelegramm des Masters (30) enthaltene Information bezüglich Adresse und/oder Polarität für sich entnimmt und erst danach dem jeweils nächsten Wechselrichter (31, 32, 33, 34) ein Spannungssignal zuleitet,
insbesondere wobei die Wechselrichter (31, 32, 33, 34) bezüglich der Weiterleitung des Spannungssignals und/oder bezüglich des Datenbusses (35) in einer Reihe angeordnet sind, insbesondere so dass vom ersten Wechselrichter (31) bis zum vorletzten Wechselrichter (32) der Reihe jedem der Wechselrichter (31, 32, 33, 34) ein anderer Wechselrichter (31, 32, 33, 34) nachgeordnet ist.

8. Verfahren nach Anspruch 6 oder 7,
**dadurch gekennzeichnet, dass**
ein letzter Wechselrichter (31, 32, 33, 34), insbesondere von welchem keinem nachgeordneten Wechselrichter (31, 32, 33, 34) ein Spannungssignal zuleitbar ist, seinem vorgeordneten Wechselrichter (31, 32, 33, 34) die zu seiner eigenen bei der Pulsweitenmodulation verwendeten Polarität invertierte Polarität vorgibt,
wonach dieser vorgeordnete Wechselrichter (31, 32, 33, 34) seinem vorgeordneten Wechselrichter (31, 32, 33, 34) die zu seiner eigenen bei der Pulsweitenmodulation verwendeten Polarität invertierte Polarität vorgibt.

9. Verfahren nach einem der Ansprüche 1 bis 3,
**dadurch gekennzeichnet, dass**
der Master (30) nach der Adressvergabe an die Wechselrichter (31, 32, 33, 34) diesen die in ihrer jeweiligen Pulsweitenmodulation zu verwendende Polarität übermittelt,
wobei die Polaritäten jeweils derart vergeben werden, dass die Summe der mit ihrer jeweiligen Polarität multiplizierten Nennleistung des jeweiligen Wechselrichters (31, 32, 33, 34) betragsmäßig minimal wird,
insbesondere wobei benachbart angeordnete Wechselrichter (31, 32, 33, 34) bevorzugt eine zueinander unterschiedliche Polarität aufweisen.

10. Verfahren nach einem der vorangegangenen Ansprüche,
**dadurch gekennzeichnet, dass**
der erste Wechselrichter (31) zueinander parallel geschaltete, aus der Gleichspannung gespeiste Halbbrücken aufweist, die jeweils als Reihenschaltung zumindest zweier steuerbarer Halbleiterschalter ausgeführt sind,
wobei der zweite Wechselrichter (32) zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des ersten Wechselrichters (31) mit pulsweitenmodulierten Ansteuersignalen angesteuert werden,
wobei die Halbleiterschalter des zweiten Wechselrichters (32) mit pulsweitenmodulierten Ansteuersignalen angesteuert werden,
wobei
- solange der Quotient aus dem Pulsweitenmodulationsverhältnis des Ansteuersignals für eine erste Halbleiterbrücke des ersten Wechselrichters (31) und dem Pulsweitenmodulationsverhältnis des Ansteuersignals für eine zweite Halbleiterbrücke des zweiten Wechselrichters (32) kleiner als ein Schwellwert, insbesondere 1, ist,
zu Beginn einer jeweiligen Pulsweitenmodulationsperiode
der obere Schalter der ersten Halbbrücke des ersten Wechselrichters (31) geöffnet ist und der untere Schalter dieser ersten Halbbrücke des ersten Wechselrichters (31) geschlossen ist und
der obere Schalter der zweiten Halbbrücke des zweiten Wechselrichters (32) geschlossen ist und der untere Schalter dieser zweiten Halbbrücke des zweiten Wechselrichters (32) geöffnet ist,
- und dass, solange der Quotient aus dem Pulsweitenmodulationsverhältnis des Ansteuersignals für eine erste Halbleiterbrücke des ersten Wechselrichters (31) und dem Pulsweitenmodulationsverhältnis des Ansteuersignals für eine zweite Halbleiterbrücke des zweiten Wechselrichters (32) größer als der Schwellwert, insbesondere 1, ist,
zu Beginn einer jeweiligen Pulsweitenmodulationsperiode
der obere Schalter der ersten Halbbrücke des ersten Wechselrichters (31) geöffnet ist und der untere Schalter dieser ersten Halbbrücke des ersten Wechselrichters (31) geschlossen ist und
der obere Schalter der zweiten Halbbrücke des zweiten Wechselrichters (32) geöffnet ist und der untere Schalter dieser zweiten Halbbrücke des zweiten Wechselrichters (32) geschlossen ist.

11. Verfahren nach einem der vorangegangenen Ansprüche,
**dadurch gekennzeichnet, dass**
das Antriebssystem einen ersten Wechselrichter (31) und einen zweiten Wechselrichter (32) aufweist,
wobei ein erster Elektromotor (M1) aus dem wechselspannungsseitigen Anschluss des ersten Wechselrichters (31) gespeist wird,
wobei ein zweiter Elektromotor (M2) aus dem wechselspannungsseitigen Anschluss des zweiten Wechselrichters (32) gespeist wird,
wobei der gleichspannungsseitige Anschluss des ersten Wechselrichters (31) parallel geschaltet ist zum gleichspannungsseitigen Anschluss des zweiten Wechselrichters (32) und diese Parallelschaltung aus einer Gleichspannung, insbesondere Zwischenkreisspannung, versorgt werden, insbesondere mittels Stromschienen,
wobei der erste Wechselrichter zueinander parallel geschaltete, aus der Gleichspannung gespeiste Halbbrücken aufweist, die jeweils als Reihenschaltung zumindest zweier steuerbarer Halbleiterschalter ausgeführt sind,
wobei der zweite Wechselrichter (32) zueinander parallel geschaltete, aus der Gleichspannung gespeiste Halbbrücken aufweist, die jeweils als Reihenschaltung zumindest zweier steuerbarer Halbleiterschalter ausgeführt sind,
wobei die Halbleiterschalter des ersten Wechselrichters (31) mit pulsweitenmodulierten Ansteuersignalen angesteuert werden,
wobei die Halbleiterschalter des zweiten Wechselrichters (32) mit pulsweitenmodulierten Ansteuersignalen angesteuert werden,
**dadurch gekennzeichnet, dass**
- solange die Differenz zwischen dem Pulsweitenmodulationsverhältnis des Ansteuersignals für eine erste Halbleiterbrücke des ersten Wechselrichters (31) und dem Pulsweitenmodulationsverhältnis des Ansteuersignals für eine zweite Halbleiterbrücke des zweiten Wechselrichters (32) kleiner als ein Schwellwert, insbesondere 50%, ist,
zu Beginn einer jeweiligen Pulsweitenmodulationsperiode
der obere Schalter der ersten Halbbrücke des ersten Wechselrichters (31) geöffnet ist und der untere Schalter dieser ersten Halbbrücke des ersten Wechselrichters (31) geschlossen ist und
der obere Schalter der zweiten Halbbrücke des zweiten Wechselrichters (32) geschlossen ist und der untere Schalter dieser zweiten Halbbrücke des zweiten Wechselrichters (32) geöffnet ist,
- und dass, solange die Differenz zwischen dem Pulsweitenmodulationsverhältnis des Ansteuersignals für eine erste Halbleiterbrücke des ersten Wechselrichters (31) und dem Pulsweitenmodulationsverhältnis des Ansteuersignals für eine zweite Halbleiterbrücke des zweiten Wechselrichters (32) größer als der Schwellwert, insbesondere 50%, ist,
zu Beginn einer jeweiligen Pulsweitenmodulationsperiode
der obere Schalter der ersten Halbbrücke des ersten Wechselrichters (31) geöffnet ist und der untere Schalter dieser ersten Halbbrücke des ersten Wechselrichters (31) geschlossen ist und
der obere Schalter der zweiten Halbbrücke des zweiten Wechselrichters (32) geöffnet ist und der untere Schalter dieser zweiten Halbbrücke des zweiten Wechselrichters (32) geschlossen ist.

12. Verfahren nach einem der vorangegangenen Ansprüche,
**dadurch gekennzeichnet, dass**
die Gleichspannung am gleichspannungsseitigen Anschluss eines netzgespeisten Gleichrichters, insbesondere AC/DC-Wandlers, zur Verfügung gestellt wird,
insbesondere wobei der Gleichrichter, insbesondere an seinem wechselspannungsseitigen Anschluss, aus einem Wechselspannungsnetz insbesondere mit Drehspannung, versorgt wird,
insbesondere wobei der gleichstromseitige Anschluss des Gleichrichters parallel geschaltet ist zum gleichspannungsseitigen Anschluss des ersten Wechselrichters (31) und zum gleichspannungsseitigen Anschluss des zweiten Wechselrichters (32).

13. Verfahren nach einem der vorangegangenen Ansprüche,
**dadurch gekennzeichnet, dass**
die Pulsweitenmodulationssignale des ersten Wechselrichters (31) zu den Pulsweitenmodulationssignalen des zweiten Wechselrichters (32) synchron verlaufen, insbesondere synchronisiert sind,
und/oder dass
der Beginn der Pulsweitenmodulationsperioden des ersten und zweiten Wechselrichters (32) synchron erfolgt
und/oder dass
innerhalb einer jeden Pulsweitenmodulationsperiode die erste Schaltflanke eines Ansteuersignals für einen oberen Halbleiterschalter des ersten Wechselrichters (31) invertiert ist und/oder invers erfolgt zur ersten Schaltflanke eines Ansteuersignals für einen oberen Halbleiterschalter des zweiten Wechselrichters (32),
und/oder dass
einer der steuerbaren Halbleiterschalter, also oberer Halbleiterschalter, einer jeweiligen Halbbrücke mit dem oberen Potential der Gleichspannung verbunden ist,
und/oder dass
einer der steuerbaren Halbleiterschalter, also unterer Halbleiterschalter, einer jeweiligen Halbbrücke mit dem unteren Potential der Gleichspannung verbunden ist,
und/oder dass
zu Beginn einer jeweiligen Pulsweitenmodulationsperiode
der obere Schalter einer ersten Halbbrücke des ersten Wechselrichters (31) geöffnet ist und der untere Schalter dieser ersten Halbbrücke des ersten Wechselrichters (31) geschlossen ist und
der obere Schalter einer zweiten Halbbrücke des zweiten Wechselrichters (32) geschlossen ist und der untere Schalter dieser zweiten Halbbrücke des zweiten Wechselrichters (32) geöffnet ist.

14. Verfahren nach einem der vorangegangenen Ansprüche,
**dadurch gekennzeichnet, dass**
ein Synchronisationssignal, insbesondere ein Synchronisationsimpulse aufweisendes Synchronisationssignal, auf Stromschienen aufmoduliert wird, welche die gleichspannungsseitigen Anschlüsse der Wechselrichter (31, 32, 33, 34) miteinander und mit dem gleichspannungsseitigen Anschluss des Gleichrichters verbinden,
oder dass ein Synchronisationssignal, insbesondere ein Synchronisationsimpulse aufweisendes Synchronisationssignal, vom Master (30) als Broadcasttelegramm zeitlich wiederkehrend mittels des Datenbusses (35) an alle Wechselrichter (31, 32, 33, 34) gesendet wird,
insbesondere wobei abhängig vom Synchronisationssignal die Pulsweitenmodulation aller Wechselrichter (31, 32, 33, 34) synchronisiert werden.

15. Antriebssystem zur Durchführung des Verfahrens nach einem der vorangegangenen Ansprüche,
**dadurch gekennzeichnet, dass**
die gleichspannungsseitigen Anschlüsse der Wechselrichter (31, 32, 33, 34) mittels Stromschienen miteinander und mit dem geichspannungsseitigen Anschluss des Gleichrichters verbunden sind
und dass ein jeweiliger Wechselrichter (31, 32, 33, 34) mit zumindest einem vorgeordneten oder nachgeordneten Wechselrichter (31, 32, 33, 34) mittels zumindest einer Leitung zur Zuleitung eines Spannungssignals mit zumindest einer elektrischen Leitung verbunden ist.

## Claims

1. Method for operating a drive system comprising a plurality of, in particular more than two, inverters (31, 32, 33, 34) and a data bus (35),
wherein a respective electric motor (M1, M2, M3, M4, Mn) is fed from the AC-side terminal of the respective inverter (31, 32, 33, 34),
wherein the DC-side terminals of the respective inverters (31, 32, 33, 34) are connected in parallel with one another, and this parallel connection is connected to the DC-side terminal of a rectifier, in particular a controllable and/or regenerative rectifier, in particular by means of conductor rails,
wherein the respective inverter (31, 32, 33, 34) comprises respective semiconductor switches which are actuated according to a respective pulse width modulation,
wherein the inverters (31, 32, 33, 34) are configured as bus subscribers of a data bus (35), to which a module configured as master (30) is also connected,
in particular wherein the module comprises the rectifier, wherein, in a first method step, in particular during initialization or start-up of the drive system, a respective bus address is assigned to each inverter (31, 32, 33, 34), and thereafter, in a second method step, there is specified to each inverter (31, 32, 33, 34) the polarity of its pulse width modulation, in particular its pulse width modulation method, wherein the polarity of the pulse width modulation of a first of the inverters (31, 32, 33, 34) differs from the polarity of the pulse width modulation of a second of the inverters (31, 32, 33, 34),
in particular such that the pulse width modulation of the actuation signals for the controllable semiconductor switches of the first of the inverters (31, 32, 33, 34) is implemented in a manner clocked anti-synchronously to the pulse width modulation of the actuation signals for the controllable semiconductor switches of the second of the inverters (31, 32, 33, 34),
**characterized in that**
for address assignment, a respective inverter (31, 32, 33, 34) supplies to a downstream inverter (31, 32, 33, 34) a voltage signal by which the respective downstream inverter (31, 32, 33, 34) is signaled to adopt the address contained in the chronologically next broadcast telegram from the master (30) as its own bus address and to supply a further voltage signal to a further inverter (31, 32, 33, 34) if such an inverter is present, and, if not, to adjust the polarity of its pulse width modulation to the polarity information contained in the broadcast telegram.

2. Method according to claim 1,
**characterized in that**
each inverter (31, 32, 33, 34) comprises half-bridges which are connected in parallel with one another and which are fed from the DC voltage, each half-bridge being configured as a series connection of at least two controllable semiconductor switches, wherein the semiconductor switches of the respective inverter (31, 32, 33, 34) are actuated by pulse-width-modulated actuation signals according to the pulse width modulation of the inverter (31, 32, 33, 34) and the polarity of the latter.

3. Method according to claim 1 or 2,
**characterized in that**,
at the start of a respective pulse width modulation period, the upper switch of the first half-bridge of the first inverter (31) is open and the lower switch of this first half-bridge of the first inverter (31) is closed,
in particular wherein the upper switch is connected to the upper potential of the voltage applied to the DC-side terminal of the inverter (31, 32, 33, 34), and wherein the lower switch is connected to the lower potential of the voltage applied to the DC-side terminal of the inverter (31, 32, 33, 34).

4. Method according to any one of the preceding claims, **characterized in that**,
starting from the master (30), the inverters (31, 32, 33, 34) are arranged in series along the data bus (35), wherein, in the first method step, starting from the master and in particular successively, each inverter (31, 32, 33, 34) assigns a bus address to the inverter (31, 32, 33, 34) arranged downstream of it in the series, until an inverter (31, 32, 33, 34) recognizes itself as the last in the series as a result of failing to further assign a bus address, and then,
in the second method step, sets a default value as the polarity of its pulse width modulation, after which, starting from the last inverter (31, 32, 33, 34) and in particular successively, each inverter (31, 32, 33, 34) transmits to the inverter (31, 32, 33, 34) arranged upstream of it in the series a polarity that is the inverse of its own polarity,
which the upstream inverter (31, 32, 33, 34) sets as the polarity of its pulse width modulation,
in particular if said upstream inverter is not configured as a double inverter, in particular a double axis, and otherwise forwards it to the inverter (31, 32, 33, 34) arranged next upstream,
in particular wherein the inverter (31, 32, 33, 34) configured as a double inverter has a single bus address and two single inverters arranged in a common housing, the pulse width modulations of which have a mutually inverse polarity.

5. Method according to any one of the preceding claims, **characterized in that**
the data bus (35) comprises a forward channel and a reverse channel such that each inverter (31, 32, 33, 34) has an input and an output of the forward channel and an input and an output of the reverse channel, wherein the master (30) is connected to the input of the forward channel of the first inverter (31) and to the output of the reverse channel of the first inverter (31), wherein, for address assignment, the master (30) sends to a first inverter (31, 32, 33, 34), via the forward channel, a first bus address, which the first inverter (31) adopts as its own bus address,
wherein the first inverter (31) generates from the first bus address a second bus address, in particular by incrementation, and sends this via the forward channel to the second inverter (32), wherein the second inverter (32) adopts the second bus address and generates from the second bus address a third bus address, in particular by incrementation, and forwards this via its forward channel,
wherein each further inverter (31, 32, 33, 34) adopts the bus address received via the input of its forward channel as its own bus address, generates from the received bus address a further bus address, in particular by incrementation, and sends this via the forward channel to the downstream inverter (31, 32, 33, 34), wherein a last inverter (31, 32, 33, 34) recognizes itself as the last inverter (31, 32, 33, 34) as a result of failing to send onward the bus address that it has generated.

6. Method according to any one of claims 1 to 3, **characterized in that**,
for address assignment, the master (30) sends a broadcast telegram via the data bus (35) recurrently over time, in particular at start-up and recurrently over time, which assigns respective information about a polarity to a respective piece of address information, in particular such that a first polarity is assigned to the first inverter (31) and a second polarity, which in particular is different from the first, is assigned to the second inverter (32).

7. Method according to claim 6,
**characterized in that**
a voltage signal can be fed from the master (30) to a first inverter (31), and a voltage signal can be fed from a respective inverter (31, 32, 33, 34) to a respective next inverter (31, 32, 33, 34),
wherein the respective inverter (31, 32, 33, 34) receiving the voltage signal then takes the information regarding the address and/or polarity that is contained in the chronologically next broadcast telegram from the master (30) for itself and only thereafter sends a voltage signal to the respective next inverter (31, 32, 33, 34),
in particular wherein the inverters (31, 32, 33, 34) are arranged in series with regard to the forwarding of the voltage signal and/or with regard to the data bus (35), in particular such that another inverter (31, 32, 33, 34) is arranged downstream of each of the inverters (31, 32, 33, 34) from the first inverter (31) to the penultimate inverter (32) in the series.

8. Method according to claim 6 or 7,
**characterized in that**
a last inverter (31, 32, 33, 34), in particular from which no voltage signal can be fed to any downstream inverter (31, 32, 33, 34), specifies to the inverter (31, 32, 33, 34) arranged upstream of it the polarity that is the inverse of its own polarity used in the pulse width modulation,
after which said upstream inverter (31, 32, 33, 34) specifies to the inverter (31, 32, 33, 34) arranged upstream of it the polarity that is the inverse of its own polarity used in the pulse width modulation.

9. Method according to any one of claims 1 to 3, **characterized in that**,
after the address assignment to the inverters (31, 32, 33, 34), the master (30) transmits to the inverters the polarity that is to be used in their respective pulse width modulation,
wherein the polarities are in each case assigned in such a way that the sum of the nominal power of the respective inverter (31, 32, 33, 34) multiplied by the respective polarity thereof becomes minimal in terms of absolute value,
in particular wherein adjacently arranged inverters (31, 32, 33, 34) preferably have a different polarity than each other.

10. Method according to any one of the preceding claims, **characterized in that**
the first inverter (31) comprises half-bridges which are connected in parallel with one another and which are fed from the DC voltage, each half-bridge being configured as a series connection of at least two controllable semiconductor switches, wherein the second inverter (32) comprises half-bridges which are connected in parallel with one another and which are fed from the DC voltage, each half-bridge being configured as a series connection of at least two controllable semiconductor switches,
wherein the semiconductor switches of the first inverter (31) are actuated by pulse-width-modulated actuation signals, wherein the semiconductor switches of the second inverter (32) are actuated by pulse-width-modulated actuation signals, wherein
- as long as the quotient of the pulse width modulation ratio of the actuation signal for a first semiconductor bridge of the first inverter (31) and the pulse width modulation ratio of the actuation signal for a second semiconductor bridge of the second inverter (32) is below a threshold value, in particular 1,
at the start of a respective pulse width modulation period, the upper switch of the first half-bridge of the first inverter (31) is open and the lower switch of this first half-bridge of the first inverter (31) is closed, and the upper switch of the second half-bridge of the second inverter (32) is closed and the lower switch of this second half-bridge of the second inverter (32) is open;
- and, as long as the quotient of the pulse width modulation ratio of the actuation signal for a first semiconductor bridge of the first inverter (31) and the pulse width modulation ratio of the actuation signal for a second semiconductor bridge of the second inverter (32) is above the threshold value, in particular 1,
at the start of a respective pulse width modulation period, the upper switch of the first half-bridge of the first inverter (31) is open and the lower switch of this first half-bridge of the first inverter (31) is closed, and the upper switch of the second half-bridge of the second inverter (32) is open and the lower switch of this second half-bridge of the second inverter (32) is closed.

11. Method according to any one of the preceding claims, **characterized in that**
the drive system comprises a first inverter (31) and a second inverter (32),
wherein a first electric motor (M1) is fed from the AC-side terminal of the first inverter (31),
wherein a second electric motor (M2) is fed from the AC-side terminal of the second inverter (32),
wherein the DC-side terminal of the first inverter (31) is connected in parallel with the DC-side terminal of the second inverter (32) and this parallel connection is supplied from a DC voltage, in particular a DC link voltage, in particular by means of conductor rails,
wherein the first inverter comprises half-bridges which are connected in parallel with one another and which are fed from the DC voltage, each half-bridge being configured as a series connection of at least two controllable semiconductor switches, wherein the second inverter (32) comprises half-bridges which are connected in parallel with one another and which are fed from the DC voltage, each half-bridge being configured as a series connection of at least two controllable semiconductor switches,
wherein the semiconductor switches of the first inverter (31) are actuated by pulse-width-modulated actuation signals, wherein the semiconductor switches of the second inverter (32) are actuated by pulse-width-modulated actuation signals, **characterized in that**
- as long as the difference between the pulse width modulation ratio of the actuation signal for a first semiconductor bridge of the first inverter (31) and the pulse width modulation ratio of the actuation signal for a second semiconductor bridge of the second inverter (32) is below a threshold value, in particular 50%,
at the start of a respective pulse width modulation period, the upper switch of the first half-bridge of the first inverter (31) is open and the lower switch of this first half-bridge of the first inverter (31) is closed, and
the upper switch of the second half-bridge of the second inverter (32) is closed and the lower switch of this second half-bridge of the second inverter (32) is open;
- and, as long as the difference between the pulse width modulation ratio of the actuation signal for a first semiconductor bridge of the first inverter (31) and the pulse width modulation ratio of the actuation signal for a second semiconductor bridge of the second inverter (32) is above the threshold value, in particular 50%,
at the start of a respective pulse width modulation period, the upper switch of the first half-bridge of the first inverter (31) is open and the lower switch of this first half-bridge of the first inverter (31) is closed, and
the upper switch of the second half-bridge of the second inverter (32) is open and the lower switch of this second half-bridge of the second inverter (32) is closed.

12. Method according to any one of the preceding claims, **characterized in that**
the DC voltage is made available at the DC-side terminal of a mains-powered rectifier, in particular an AC/DC converter,
in particular wherein the rectifier, in particular at the AC-side terminal thereof, is supplied from an AC voltage network, in particular with a three-phase voltage,
in particular wherein the DC-side terminal of the rectifier is connected in parallel with the DC-side terminal of the first inverter (31) and with the DC-side terminal of the second inverter (32).

13. Method according to any one of the preceding claims, **characterized in that**
the pulse width modulation signals of the first inverter (31) run synchronously to the pulse width modulation signals of the second inverter (32), in particular are synchronized therewith, and/or **in that**
the start of the pulse width modulation periods of the first and second inverter (32) occurs synchronously,
and/or **in that**,
within each pulse width modulation period, the first switching edge of an actuation signal for an upper semiconductor switch of the first inverter (31) is inverted and/or occurs inversely in relation to the first switching edge of an actuation signal for an upper semiconductor switch of the second inverter (32), and/or **in that**
one of the controllable semiconductor switches, i.e. the upper semiconductor switch, of a respective half-bridge is connected to the upper potential of the DC voltage,
and/or **in that**
one of the controllable semiconductor switches, i.e. the lower semiconductor switch, of a respective half-bridge is connected to the lower potential of the DC voltage,
and/or **in that**,
at the start of a respective pulse width modulation period, the upper switch of a first half-bridge of the first inverter (31) is open and the lower switch of this first half-bridge of the first inverter (31) is closed, and
the upper switch of a second half-bridge of the second inverter (32) is closed and the lower switch of this second half-bridge of the second inverter (32) is open.

14. Method according to any one of the preceding claims, **characterized in that**
a synchronization signal, in particular a synchronization signal containing synchronization pulses, is modulated onto conductor rails which connect the DC-side terminals of the inverters (31, 32, 33, 34) to one another and to the DC-side terminal of the rectifier,
or **in that** a synchronization signal, in particular a synchronization signal containing synchronization pulses, is sent recurrently over time by the master (30) as a broadcast telegram to all the inverters (31, 32, 33, 34) by means of the data bus (35),
in particular wherein the pulse width modulation of all the inverters (31, 32, 33, 34) is synchronized as a function of the synchronization signal.

15. Drive system for carrying out the method according to any one of the preceding claims,
**characterized in that**
the DC-side terminals of the inverters (31, 32, 33, 34) are connected to one another and to the DC-side terminal of the rectifier by means of conductor rails,
and **in that** a respective inverter (31, 32, 33, 34) is connected to at least one upstream or downstream inverter (31, 32, 33, 34) by means of at least one line so as to feed a voltage signal by means of at least one electrical line.

## Revendications

1. Procédé pour faire fonctionner un système d'entraînement, comprenant plusieurs, en particulier plus de deux, onduleurs (31, 32, 33, 34), et un bus de données (35),
un moteur électrique respectif (M1 M2, M3, M4, Mn) étant alimenté à partir de la borne côté tension alternative de l'onduleur respectif (31, 32, 33, 34),
les bornes côté tension continue des onduleurs respectifs (31, 32, 33, 34) étant montées en parallèle les unes par rapport aux autres et ce montage en parallèle étant relié à la borne côté tension continue d'un onduleur, en particulier d'un onduleur pouvant être commandé et/ou recyclé, en particulier au moyen de rails conducteurs, les onduleurs respectifs (31, 32, 33, 34) présentant des commutateurs à semi-conducteurs respectifs, commandés selon une modulation de largeur d'impulsion respective,
les onduleurs (31, 32, 33, 34) étant conçus sous la forme de composants de bus d'un bus de données (35) auquel est également raccordé un module conçu en tant que maître (30),
en particulier, le module comprenant le onduleur,
une adresse de bus respective étant attribuée à chaque onduleur (31, 32, 33, 34) dans une première étape de procédé, en particulier lors de l'initialisation ou de la mise en service du système d'entraînement, puis la polarité de sa modulation de largeur d'impulsion, en particulier de son procédé de modulation de largeur d'impulsion, est donnée à chaque onduleur (31, 32, 33, 34) dans une seconde étape de procédé,
la polarité de la modulation de largeur d'impulsions d'un premier des onduleurs (31, 32, 33, 34) étant différente de la polarité de la modulation de largeur d'impulsions d'un second des onduleurs (31, 32, 33, 34),
en particulier de manière à ce que la modulation de largeur d'impulsion des signaux de commande pour les commutateurs à semi-conducteurs pouvant être commandés du premier des onduleurs (31, 32, 33, 34) soit effectuée de manière synchrone par rapport à la modulation de largeur d'impulsion des signaux de commande pour les commutateurs à semi-conducteurs pouvant être commandés du second des onduleurs (31, 32, 33, 34),
**caractérisé en ce que**
pour l'attribution d'adresse, un onduleur respectif (31, 32, 33, 34) envoie un signal de tension à un onduleur (31, 32, 33, 34) agencé à la suite, signalant à l'onduleur (31, 32, 33, 34) respectif suivant d'accepter l'adresse contenue dans le télégramme de diffusion chronologiquement postérieur du maître (30) comme adresse de bus propre et d'envoyer lui-même un signal de tension supplémentaire à un onduleur supplémentaire (31, 32, 33, 34) s'il y en a et, dans le cas contraire, d'adapter la polarité de sa modulation de largeur d'impulsion à l'information de polarité contenue dans le télégramme de diffusion.

2. Procédé selon la revendication 1,
**caractérisé en ce que**
chaque onduleur (31, 32, 33, 34) présente des demi-ponts reliés en parallèle l'un à l'autre et alimentés par la tension continue, qui sont conçus chacun en tant que connexion en série d'au moins deux commutateurs à semi-conducteurs pouvant être commandés,
les commutateurs à semi-conducteurs des onduleurs respectifs (31, 32, 33, 34) sont commandés via des signaux de commande à modulation de largeur d'impulsion en fonction de la modulation de largeur d'impulsions des onduleurs (31, 32, 33, 34) et de leur polarité.

3. Procédé selon la revendication 1 ou 2,
**caractérisé en ce que**
au début d'une période de modulation de largeur d'impulsion respective, le commutateur supérieur du premier demi-pont du premier onduleur (31) est ouvert et le commutateur inférieur de ce premier demi-pont du premier onduleur (31) est fermé, en particulier, le convertisseur supérieur étant relié au potentiel supérieur de la tension appliquée à la borne côté tension continue des onduleurs (31, 32, 33, 34) et le convertisseur inférieur étant relié au potentiel inférieur de la tension appliquée à la borne côté tension continue des onduleurs (31, 32, 33, 34).

4. Procédé selon l'une quelconque des revendications précédentes,
**caractérisé en ce que**
à partir du maître (30), les onduleurs (31, 32, 33, 34) sont agencés en une rangée le long du bus de données (35),
au cours de la première étape de procédé, à partir du maître (30), en particulier de manière successive, chaque onduleur (31, 32, 33, 34) attribue une adresse de bus à son onduleur (31, 32, 33, 34) suivant dans la rangée jusqu'à ce qu'un onduleur (31, 32, 33, 34) se reconnaisse comme le dernier de la rangée en raison de l'échec d'une attribution supplémentaire d'une adresse de bus, et
dans la seconde étape de procédé, définit une valeur par défaut comme polarité de sa modulation de largeur d'impulsion, après quoi, à partir du dernier onduleur (31, 32, 33, 34), en particulier successivement, chaque onduleur (31, 32, 33, 34) transmet à son onduleur (31, 32, 33, 34) situé en amont dans la rangée une polarité inversée à sa propre polarité,
lequel onduleur en amont (31, 32, 33, 34) définit comme polarité sa modulation de largeur d'impulsion,
en particulier s'il n'est pas réalisé sous la forme d'un onduleur double, en particulier à deux axe, et s'il est sinon transmis à l'onduleur (31, 32, 33, 34) qui est lui-même à son tour situé en amont,
en particulier, l'onduleur (31, 32, 33, 34) conçu sous la forme d'un onduleur double présente une seule adresse de bus et deux onduleurs individuels agencés dans un boîtier commun, dont les modulations de largeur d'impulsion présentent une polarité inversée l'une par rapport à l'autre.

5. Procédé selon l'une quelconque des revendications précédentes,
**caractérisé en ce que**
le bus de données (35) présente un canal aller et un canal retour de sorte que chaque onduleur (31, 32, 33, 34) présente une entrée et une sortie du canal aller et présente une entrée et une sortie du canal retour, le maître (30) étant relié à l'entrée du canal aller du premier onduleur (31) et à la sortie du canal retour du premier onduleur (31), pour l'attribution d'adresse, le maître (30) envoie une première adresse de bus à un premier onduleur (31, 32, 33, 34) via le canal aller, que le premier onduleur (31) reprend comme sa propre adresse de bus,
le premier onduleur (31) générant une deuxième adresse de bus à partir de la première adresse de bus, en particulier par incrémentation, et l'envoie au deuxième onduleur (32) via le canal aller, dans lequel le deuxième onduleur (32) reprend la deuxième adresse de bus et génère une troisième adresse de bus à partir de la deuxième adresse de bus, en particulier par incrémentation, et la transmet via son canal aller, chaque onduleur supplémentaire (31, 32, 33, 34) reprenant l'adresse de bus reçue via son entrée du canal aller comme sa propre adresse de bus et générant une adresse de bus supplémentaire à partir de l'adresse de bus reçue, notamment par incrémentation, et l'envoyant via le canal aller à l'onduleur suivant (31, 32, 33, 34), un dernier onduleur (31, 32, 33, 34) se reconnaissant comme le dernier onduleur (31, 32, 33, 34) en raison de l'échec d'un envoi ultérieur de l'adresse de bus qu'il a générée.

6. Procédé selon l'une quelconque des revendications 1 à 3,
**caractérisée en ce que**
pour l'attribution d'adresses, le maître (30) envoie de manière récurrente, en particulier lors de la mise en service et de manière récurrente, un télégramme de diffusion via le bus de données (35), qui attribue à une information d'adresse respective une information respective sur une polarité, en particulier de manière à ce que le premier onduleur (31) reçoive une première polarité et que le deuxième onduleur (32) reçoive une deuxième polarité, en particulier différente de la première.

7. Procédé selon la revendication 6,
**caractérisée en ce que**
un signal de tension peut être transmis par le maître (30) à un premier onduleur (31) et un signal de tension peut être transmis par un onduleur respectif (31, 32, 33, 34) à un onduleur respectif suivant (31, 32, 33, 34),
l'onduleur respectif (31, 32, 33, 34) recevant le signal de tension prend alors les informations relatives à l'adresse et/ou à la polarité contenues dans le télégramme de diffusion suivant du maître (30) et transmet ensuite un signal de tension à l'onduleur respectif le plus proche (31, 32, 33, 34),
en particulier, les onduleurs (31, 32, 33, 34) étant agencés en une rangée par rapport à la transmission du signal de tension et/ou par rapport au bus de données (35), de sorte que du premier onduleur (31) à l'avant-dernier onduleur (32) de la rangée, un autre onduleur (31, 32, 33, 34) est agencé en aval de chacun des onduleurs (31, 32, 33, 34).

8. Procédé selon la revendication 6 ou 7,
**caractérisée en ce que**
un dernier onduleur (31, 32, 33, 34), en particulier à partir duquel aucun signal de tension ne peut être transmis à aucun onduleur (31, 32, 33, 34) en aval, donne à son onduleur (31, 32, 33, 34) en amont la polarité inversée par rapport à sa propre polarité utilisée dans la modulation de largeur d'impulsion,
après quoi cet onduleur en amont (31, 32, 33, 34) donne à son onduleur en amont (31, 32, 33, 34) la polarité inversée par rapport à sa propre polarité utilisée dans la modulation de largeur d'impulsion.

9. Procédé selon l'une quelconque des revendications 1 à 3,
**caractérisée en ce que**
après l'attribution d'adresse, le maître (30) transmet aux onduleurs (31, 32, 33, 34) la polarité à utiliser dans leur modulation de largeur d'impulsion respective,
les polarités sont attribuées de manière à ce que la somme de la puissance nominale des onduleurs respectifs (31, 32, 33, 34) multipliée par leur polarité respective soit minimale en termes de montant,
en particulier, les onduleurs (31, 32, 33, 34) disposés de manière adjacente présentant de préférence une polarité différente les uns par rapport aux autres.

10. Procédé selon l'une quelconque des revendications précédentes,
**caractérisée en ce que**
le premier onduleur (31) présente des demi-ponts reliés en parallèle l'un à l'autre, alimentés par la tension continue, qui sont respectivement conçus sous la forme d'une connexion en série d'au moins deux commutateurs à semi-conducteurs pouvant être commandés,
le deuxième onduleur (32) présentant des demi-ponts reliés en parallèle l'un à l'autre, alimentés par la tension continue, qui sont respectivement conçus sous la forme d'une connexion en série d'au moins deux commutateurs à semi-conducteurs pouvant être commandés,
les commutateurs à semi-conducteurs du premier onduleur (31) étant commandés par des signaux de commande à modulation de largeur d'impulsion,
les commutateurs à semi-conducteurs du deuxième onduleur (32) étant commandés par des signaux de commande à modulation de largeur d'impulsion,
et
- tant que le rapport entre la proportion de modulation de largeur d'impulsion du signal de commande pour un premier pont semi-conducteur du premier onduleur (31) et la proportion de modulation de largeur d'impulsion du signal de commande pour un second pont semi-conducteur du deuxième onduleur (32) est inférieur à une valeur de seuil, en particulier 1,
au début d'une période de modulation de largeur d'impulsion respective le convertisseur supérieur du premier demi-pont du premier onduleur (31) est ouvert et le convertisseur inférieur de ce premier demi-pont du premier onduleur (31) est fermé, et
le convertisseur supérieur du second demi-pont du deuxième onduleur (32) est fermé et le convertisseur inférieur de ce second demi-pont du deuxième onduleur (32) est ouvert,
- et en ce tant que le rapport entre la proportion de modulation de largeur d'impulsion du signal de commande pour un premier pont semi-conducteur du premier onduleur (31) et la proportion de modulation de largeur d'impulsion du signal de commande pour un second pont semi-conducteur du deuxième onduleur (32) est supérieur à la valeur de seuil, en particulier 1,
au début d'une période de modulation de largeur d'impulsion respective le convertisseur supérieur du premier demi-pont du premier onduleur (31) est ouvert et le convertisseur inférieur de ce premier demi-pont du premier onduleur (31) est fermé, et
le convertisseur supérieur du second demi-pont du deuxième onduleur (32) est ouvert et le convertisseur inférieur de ce second demi-pont du deuxième onduleur (32) est fermé.

11. Procédé selon l'une quelconque des revendications précédentes,
**caractérisé en ce que**
le système d'entraînement présente un premier onduleur (31) et un deuxième onduleur (32),
un premier moteur électrique (M1) étant alimenté à partir de la borne côté tension alternative du premier onduleur (31),
un second moteur électrique (M2) étant alimenté à partir de la borne côté tension alternative du deuxième onduleur (32),
La borne coté tension continue du premier onduleur (31) étant connectée en parallèle à la borne coté tension continue du deuxième onduleur (32) et cette connexion en parallèle étant alimentée par une tension continue, en particulier une tension de circuit intermédiaire, notamment au moyen de rails conducteurs,
le premier onduleur présentant des demi-ponts reliés en parallèle l'un à l'autre, alimentés par la tension continue, qui sont respectivement conçus sous la forme d'une connexion en série d'au moins deux commutateurs à semi-conducteurs pouvant être commandés,
le deuxième onduleur (32) présentant des demi-ponts reliés en parallèle l'un à l'autre, alimentés par la tension continue, qui sont respectivement conçus sous la forme d'une connexion en série d'au moins deux commutateurs à semi-conducteurs pouvant être commandés,
les commutateurs à semi-conducteurs du premier onduleur (31) étant commandés par des signaux de commande à modulation de largeur d'impulsion,
les commutateurs à semi-conducteurs du deuxième onduleur (32) étant commandés par des signaux de commande à modulation de largeur d'impulsion,
**caractérisé en ce que**
- tant que la différence entre la proportion de modulation de largeur d'impulsion du signal de commande pour un premier pont semi-conducteur du premier onduleur (31) et la proportion de modulation de largeur d'impulsion du signal de commande pour un second pont semi-conducteur du deuxième onduleur (32) est inférieur à une valeur de seuil, en particulier 50 %,
au début d'une période de modulation de largeur d'impulsion respective le convertisseur supérieur du premier demi-pont du premier onduleur (31) est ouvert et le convertisseur inférieur de ce premier demi-pont du premier onduleur (31) est fermé, et
le convertisseur supérieur du second demi-pont du deuxième onduleur (32) est fermé et le convertisseur inférieur de ce second demi-pont du deuxième onduleur (32) est ouvert,
- et **en ce que** tant que la différence entre la proportion de modulation de largeur d'impulsion du signal de commande pour un premier pont semi-conducteur du premier onduleur (31) et la proportion de modulation de largeur d'impulsion du signal de commande pour un second pont semi-conducteur du deuxième onduleur (32) est supérieure à la valeur de seuil, en particulier 50 %,
au début d'une période de modulation de largeur d'impulsion respective le convertisseur supérieur du premier demi-pont du premier onduleur (31) est ouvert et le convertisseur inférieur de ce premier demi-pont du premier onduleur (31) est fermé, et
le convertisseur supérieur du second demi-pont du deuxième onduleur (32) est ouvert et le convertisseur inférieur de ce second demi-pont du deuxième onduleur (32) est fermé.

12. Procédé selon l'une quelconque des revendications précédentes,
**caractérisé en ce que**
la tension continue est fournie à la borne côté tension continue d'un redresseur alimenté par le réseau, en particulier un convertisseur CA/CC,
en particulier, le redresseur, en particulier à sa connexion côté tension alternative, étant alimenté à partir d'un réseau de tension alternative, en particulier avec une tension triphasée,
en particulier la borne coté courant continu du redresseur étant connectée en parallèle à la borne coté tension continue du premier onduleur (31) et à la borne coté tension continue du deuxième onduleur (32).

13. Procédé selon l'une quelconque des revendications précédentes,
**caractérisé en ce que**
les signaux de modulation de largeur d'impulsion du premier onduleur (31) sont coordonnés avec les signaux de modulation de largeur d'impulsion du deuxième onduleur (32), en particulier sont synchronisés,
et/ou **en ce que**
les débuts des périodes de modulation de largeur d'impulsions des premier et second onduleurs (32) surviennent de manière synchrone,
et/ou **en ce que**
au cours de chaque période de modulation de largeur d'impulsion, le premier flanc de commutation d'un signal de commande pour un commutateur à semi-conducteurs supérieur du premier onduleur (31) est inversé et/ou inversement se produit sur le premier flanc de commutation d'un signal de commande pour un commutateur à semi-conducteur supérieurs du deuxième onduleur (32),
et/ou **en ce que**
l'un des commutateurs à semi-conducteur pouvant être commandés, c'est-à-dire le convertisseur à semi-conducteurs supérieur, d'un demi-pont respectif est connecté au potentiel supérieur de la tension continue,
et/ou **en ce que**
l'un des commutateurs à semi-conducteurs pouvant être commandés, c'est-à-dire le convertisseur à semi-conducteur inférieur, d'un demi-pont respectif est connecté au potentiel inférieur de la tension continue,
et/ou **en ce que**
au début d'une période de modulation de largeur d'impulsion respective le convertisseur supérieur d'un premier demi-pont du premier onduleur (31) est ouvert et le convertisseur inférieur de ce premier demi-pont du premier onduleur (31) est fermé, et
le convertisseur supérieur d'un second demi-pont du deuxième onduleur (32) est fermé et le convertisseur inférieur de ce second demi-pont du deuxième onduleur (32) est ouvert.

14. Procédé selon l'une quelconque des revendications précédentes,
**caractérisé en ce que**
un signal de synchronisation, en particulier un signal de synchronisation présentant impulsion de synchronisation, est modulé sur des rails conducteurs qui relient les bornes côté tension continue des onduleurs (31, 32, 33, 34) entre elles et avec la borne côté tension continue de l'onduleur,
ou **en ce qu'**un signal de synchronisation, en particulier un signal de synchronisation présentant une impulsion de synchronisation, est envoyé par le maître (30) à tous les onduleurs (31, 32, 33, 34) sous forme de télégramme de diffusion de manière récurrente dans le temps au moyen du bus de données (35),
en particulier, la modulation de largeur d'impulsions de tous les onduleurs (31, 32, 33, 34) est synchronisée en fonction du signal de synchronisation.

15. Système d'entraînement pour la mise en œuvre du procédé selon l'une des revendications précédentes,
**caractérisé en ce que**
les bornes côté tension continue des onduleurs (31, 32, 33, 34) sont connectées les unes aux autres et à la borne côté tension continue de l'onduleur au moyen de rails conducteurs
et **en ce qu'**un onduleur respectif (31, 32, 33, 34) est relié à au moins un onduleur en amont ou en aval (31, 32, 33, 34) au moyen d'au moins une ligne pour la transmission d'un signal de tension à au moins une ligne électrique.
